# EUROPEAN PATENT APPLICATION

(11) **EP 4 776 665 A1**
(43) Date of publication of application: **15.07.2026**
(21) Application number: 25814103.5
(22) Date of filing: 06.01.2025
(51) Int. Cl.: H04W 8/24

(54) **DOWNLOAD METHOD, COMMUNICATION SYSTEM, DEVICE, READABLE MEDIUM AND PROGRAM PRODUCT**

(30) Priority: 31.05.2024 CN 202410703832
(71) Applicant: HUAWEI TECHNOLOGIES CO., LTD., Shenzhen, Guangdong 518129 (CN)
(72) Inventor: CHEN, Minjiang, Shenzhen, Guangdong 518129 (CN); LI, Weisheng, Shenzhen, Guangdong 518129 (CN)
(74) Representative: Goddar, Heinz J.
(86) International application number: PCT/CN2025/070810
(87) International publication number: WO 2025/246378

(57) **Abstract**

This application relates to the field of software engineering design technologies, and specifically, to a download method, a communication system, a device, a readable medium, and a program product. In the method, in a release phase of a resource like an application, when application description information and an application entity are released on a server for an area to which a specified service location belongs, the application description information is also synchronously released on servers for a plurality of areas. In this way, when a user searches for a resource like an application in an application market or the like on a user equipment, the user equipment can find, without an obstacle, the application description information released on the server for each area, and provide an application search result for the user based on the found application description information. In addition, the user equipment may further switch a use location to a service location at which the found application is correspondingly released, and obtain a related application entity resource for installation and use. This helps improve user experience in searching for and downloading applications in the application market.

## Description

This application claims priority to Chinese Patent Application No. 202410703832.3, filed with the China National Intellectual Property Administration on May 31, 2024 and entitled "DOWNLOAD METHOD, COMMUNICATION SYSTEM, DEVICE, READABLE MEDIUM, AND PROGRAM PRODUCT", which is incorporated herein by reference in its entirety.

### TECHNICAL FIELD

The present invention relates to the field of software engineering design technologies, and specifically, to a download method, a communication system, a device, a readable medium, and a program product.

### BACKGROUND

When installing an application (application, APP) on a terminal device, a user usually needs to search for a corresponding application name in an application market to find a corresponding application package resource, and then perform downloading and installation.

However, different applications may be released in different countries or regions. For example, an application A may not be released in a country A but may be released in a country B. Therefore, when searching for the application A in the application market on the terminal device, a user in the country A may fail to find a corresponding application installation package, and requirements of the user for downloading and installing the application A cannot be met.

### SUMMARY

This application provides a download method, a communication system, a device, a readable medium, and a program product. When a user searches for a resource like an application in an application market or the like on a user equipment, the user equipment can find, without an obstacle based on the download method provided in this application, application description information released on a server for each area, and provide an application search result for the user based on the found application description information. In addition, the user equipment may further switch a use location to a service location at which the found application is correspondingly released, and obtain a related application entity resource for installation and use. This helps improve user experience in searching for and downloading applications in the application market.

According to a first aspect, this application provides a download method, applied to a first device, where a use location currently set for the first device corresponds to a first service location; and the method includes: detecting a first operation of a user in a first application, where the first operation indicates to obtain a first resource; determining that a release location of the first resource is a second service location; and switching the use location of the first device to the second service location in response to the first operation, and displaying the first resource in the first application.

For example, the first device may be a user equipment, for example, a user equipment 10 in the following specific implementations. The first application may be, for example, an application market, or may be a music application or a video application. Correspondingly, the first resource obtained as indicated by the first operation may be a resource file, for example, application, music, or video. In some embodiments, the first operation may be, for example, a related operation that the user correspondingly indicates, after searching for an application in the application market, to view or install the found application. In some other embodiments, the first operation may alternatively be a related operation that the user indicates, after searching for music or a video in the music application or the video application, to download or play the found music or video, or the like. This is not limited herein.

Resource description information (for example, application description information) of the first resource may be released at the first service location while being released at the second service location. The first resource may be released at the second service location. The first service location and the second service location may be different countries or regions. In this way, an interface related to obtaining of the first resource may be displayed in the first application (for example, the application market) run by the user equipment, so that the first operation of the user in the first application may be detected. In view of this, when responding to the first operation, the user equipment (namely, the first device) may trigger switching from the current use location (namely, the first service location) to the release location of the first resource (namely, the second service location), to obtain and display the first resource. This helps improve user experience in searching for and downloading resources such as applications in an application like the application market.

In a possible implementation of the first aspect, the first resource includes first description information and a first resource file, where a release location of the first description information includes a plurality of areas, and the plurality of areas include the second service location and the first service location; and a release location of the first resource file includes the second service location.

For example, application description information of an application may be released on servers for a plurality of areas, and an application entity of the application may be released on a server for an area to which the second service location belongs.

In a possible implementation of the first aspect, the detecting the first operation of the user in the first application includes: detecting a search operation of the user in the first application, where the search operation indicates to search for the first resource; finding, by accessing a second device based on the first application, the first description information corresponding to the first resource, and displaying, in the first application, a first search result generated based on the first description information; and detecting, corresponding to the first operation of the user on the first resource in the first search result, the first operation of the user in the first application.

For example, the search operation of the user in the first application may be, for example, an operation that the user searches for the first resource (for example, a target application) by inputting information like an application name on a search interface of the application market. The second device may be, for example, an application market server on which an application market service end is deployed. The application market server can provide, for a corresponding application market client, first description information (for example, application description information) that is stored in an information database and that is released in a plurality of areas. Correspondingly, a user equipment on which the application market client is installed may display, based on the application description information, a search result (for example, the first search result) corresponding to the target application.

Based on this, the first operation of the user in the first application may be, for example, a related operation of tapping a view control, on a related display interface for the search result corresponding to the target application, to view the target application.

In a possible implementation of the first aspect, the determining that the release location of the first resource is the second service location includes: obtaining release location information of the first resource file; and determining, based on the release location information of the first resource file, that the release location of the first resource is the second service location.

For example, the release location information of the first resource file may be stored in the servers (including the second device), for the plurality of areas, on which the responded first description information is released. The release location information may include, for example, information like a name of a country or a region in which an application entity of the target application is correspondingly released. This is not limited herein.

In a possible implementation of the first aspect, the switching the use location of the first device to the second service location in response to the first operation includes: sending, to the second device, a switching request indicating to switch from the first service location to the second service location; and updating the use location to the second service location based on a service location switching success notification returned by the second device.

For example, when detecting the related operation that the user taps the view control to view the target application, the user equipment may trigger sending of the switching request to a server (for example, the second device) for an area to which the currently set first service location belongs, to request to switch the currently set use location (namely, the first service location).

In a possible implementation of the first aspect, the sending, to the second device, the switching request indicating to switch from the first service location to the second service location includes: displaying a first interface of the first application, where the first interface is for prompting the user to determine whether to perform service location switching; and sending, corresponding to a second operation that the user determines to perform service location switching, the switching request to the second device, where the switching request indicates to switch from the first service location to the second service location.

For example, when detecting the related operation that the user taps the view control to view the target application, the user equipment may display a related prompt interface for prompting that the service location switching needs to be performed. Further, when detecting that the second operation that the user determines, on the prompt interface, to perform service location switching, for example, when detecting an operation like tapping an "OK" control by the user, the user equipment triggers sending of the switching request to the server (for example, the second device) for the area to which the currently set first service location belongs, to request to switch the currently set use location.

In a possible implementation of the first aspect, the use location currently set for the first device is related to a first account logged in on the first device, and the first account is logged in on the first device for correspondingly accessing a third device; and the based on the service location switching success notification returned by the second device includes: receiving the service location switching success notification returned by the third device via the second device.

For example, the third device may be an account server configured to manage the first account logged in on the user equipment (namely, the first device). Correspondingly, the foregoing process in which the user equipment performs service location switching may be implemented by sending, by the second device, the switching request to the third device. The third device (for example, the account server) may reset a use location of the first account in response to the switching request of the user equipment forwarded by the second device (for example, an application market server for the area to which the first service location belongs), for example, set the use location of the first account to the second service location. After the setting is completed, the account server may return the notification of the successful switch to the user equipment via the application market server.

In a possible implementation of the first aspect, the area to which the first service location belongs is the same as the area to which the second service location belongs, the second device corresponds to the server for the area to which the first service location or the second service location belongs; and the displaying the first resource in the first application includes: displaying a second interface of the first application, where the second interface indicates to install or play the first resource; detecting a third operation that the user indicates to install or play the first resource, and sending, to the second device, a download request corresponding to the first resource; and obtaining the first resource returned by the second device, and displaying a third interface of the first application, where display content on the third interface includes the first resource.

For example, when the area to which the current use location of the user equipment (namely, the first service location) belongs is the same as the area to which the release location of the first resource (namely, the second service location) belongs, a server correspondingly interacting with the user equipment when the user equipment sends related requests before the service location switching is the same as a server correspondingly interacting with the user equipment when the user equipment sends related requests after the service location switching, for example, the second device. In this case, when detecting the third operation that the user indicates to install or play the first resource, the user equipment may continue to send the corresponding download request to the second device. The third operation may be, for example, an operation like tapping an installation control on an application download interface by the user. The operation may trigger downloading of the application entity of the target application and installation of the target application. In some other embodiments, the third operation may alternatively be, for example, an operation like tapping, on a music playing interface by the user, to play target music, or tapping, on a video playing interface by the user, to play a target video. This is not limited herein.

In a possible implementation of the first aspect, the area to which the first service location belongs is different from the area to which the second service location belongs, the server for the area to which the first service location belongs corresponds to the second device, and the server for the area to which the second service location belongs corresponds to a third device; and the displaying the first resource in the first application includes: displaying a second interface of the first application, where the second interface indicates to install or play the first resource; detecting a third operation that the user indicates to install or play the first resource, and sending, to the third device, a download request corresponding to the first resource; and obtaining the first resource returned by the third device, and displaying a third interface of the first application, where display content on the third interface includes the first resource.

For example, when the area to which the current use location of the user equipment (namely, the first service location) belongs is different from the area to which the release location of the first resource (namely, the second service location) belongs, a server correspondingly interacting with the user equipment when the user equipment sends related requests before the service location switching is different from a server correspondingly interacting with the user equipment when the user equipment sends related requests after the service location switching. For example, before the service location switching, the user equipment may send, to the second device based on the first service location, a related operation request like searching for the first resource. After the service location switching, the user equipment may send the download request or the like to the third device based on the second service location. To be specific, in this case, in response to the third operation, the user equipment needs to send the download request to the server (namely, the third device) for the area to which the second service location after the switching belongs. The third operation may be, for example, an operation like tapping an installation control on an application download interface by the user. The operation may trigger downloading of the application entity of the target application and installation of the target application. Details are not described herein again.

In a possible implementation of the first aspect, display content on the second interface is related to the first resource released at the second service location; and the display content on the second interface further includes one or more of the following data related to the first resource:
rating data corresponding to the first resource; a statistical result of a quantity of downloads or installations corresponding to the first resource; review data corresponding to the first resource; a security detection result corresponding to the first resource; detailed description data corresponding to the first resource; and a recommended resource correspondingly matched with the first resource.

For example, the second interface may be the application download interface. Correspondingly, the rating data may be, for example, a rating of the target application, for example, a rating of "4.0". The statistical result of the quantity of downloads or installations may be, for example, a quantity of installations of the target application, for example, "880,000 installations". The review data may be, for example, a user evaluation for the target application. The security detection result may indicate, for example, that the target application "passes security detection". The recommended resource may be, for example, a recommended application of a same or similar type as the target application. This is not limited herein.

In a possible implementation of the first aspect, the first resource includes any one of an application, music, and a video.

In a possible implementation of the first aspect, corresponding to the first resource being an application, the detecting the first operation of the user in the first application includes: detecting an operation that the user indicates to view or install the first resource in the first search result.

In a possible implementation of the first aspect, corresponding to the first resource being music or a video, the detecting the first operation of the user in the first application includes: detecting an operation that the user indicates to download or play the first resource in the first search result.

According to a second aspect, this application provides a communication system, including a first device and a second device, where a use location currently set for the first device corresponds to a first service location, where the first device is configured to send a first obtaining request for a first resource to the second device in response to a detected first operation of a user in a first application, where the first operation indicates to obtain the first resource;
the second device is configured to return first description information of the first resource to the first device in response to the first obtaining request sent by the first device, where the first description information includes release location information of the first resource;
the first device is configured to determine, based on the release location information of the first resource, that a release location of the first resource is a second service location; the first device switches the use location to the second service location, and sends a second obtaining request for a first resource file of the first resource to the second device based on the second service location; and
the second device is configured to return the first resource file to the first device in response to the second obtaining request sent by the first device.

In a possible implementation of the second aspect, the system further includes a third device, where the third device corresponds to a server for an area to which the second service location belongs, where the first device switches the use location to the second service location, and sends a third obtaining request for the first resource file of the first resource to the third device based on the second service location; and
the third device is configured to return the first resource file to the first device in response to the third obtaining request sent by the first device.

In a possible implementation of the second aspect, a release location of the first description information includes a plurality of areas, the plurality of areas include an area to which the first service location belongs and the area to which the second service location belongs; and a release location of the first resource file includes the second service location.

According to a third aspect, this application provides an electronic device, including one or more processors and one or more memories. The one or more memories store one or more programs. When the one or more programs are executed by the one or more processors, the electronic device is caused to perform the download method according to the first aspect and the possible implementations of the first aspect.

According to a fourth aspect, this application provides a computer-readable medium. The readable medium stores instructions. When the instructions are executed on a computer, the computer is caused to perform the download method according to the first aspect and the possible implementations of the first aspect.

According to a fifth aspect, this application provides a computer program product, including a computer program/instructions. When the computer program/instructions is/are executed by a processor, the download method according to the first aspect and the possible implementations of the first aspect is implemented.

For beneficial effect of the second aspect to the fifth aspect, refer to related descriptions in the first aspect and the possible implementations of the first aspect. Details are not described herein again.

### BRIEF DESCRIPTION OF DRAWINGS

FIG. 1 is a diagram of an application release and download scenario to which a download method is applicable;
FIG. 2a is a diagram of setting interfaces, displayed by a mobile phone, of an application market according to an embodiment of this application;
FIG. 2b is a diagram of a prompt interface, displayed by a mobile phone, of an application market according to an embodiment of this application;
FIG. 3a is a diagram of an application release process according to an embodiment of this application;
FIG. 3b is a diagram of a release rule set corresponding to an application release process according to an embodiment of this application;
FIG. 4a-1 and FIG. 4a-2 are a diagram of an interface change corresponding to searching for an application in an application market according to an embodiment of this application;

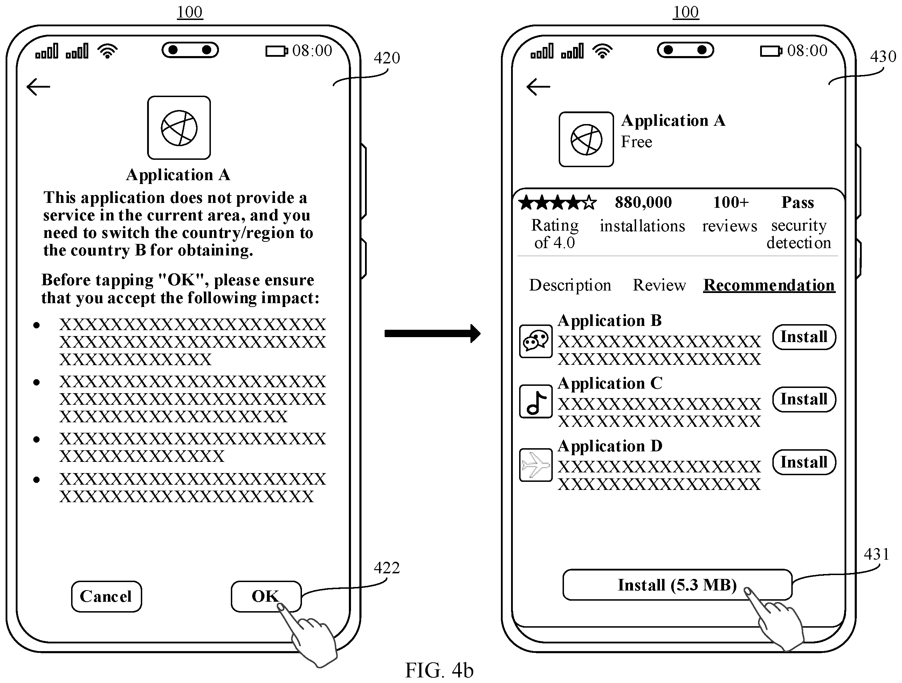

FIG. 4b is a diagram of an interface change for downloading an application in an application market according to an embodiment of this application;

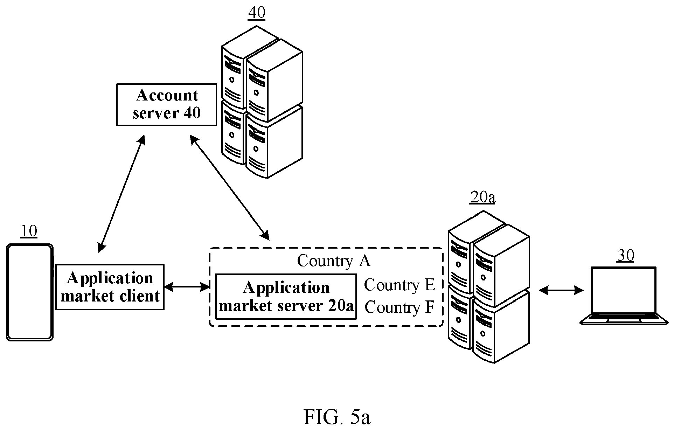

FIG. 5a is a diagram of an application scenario of a download method according to Embodiment 1 of this application;
FIG. 5b-1 and FIG. 5b-2 are a diagram of an implementation procedure of a download method according to Embodiment 1 of this application;

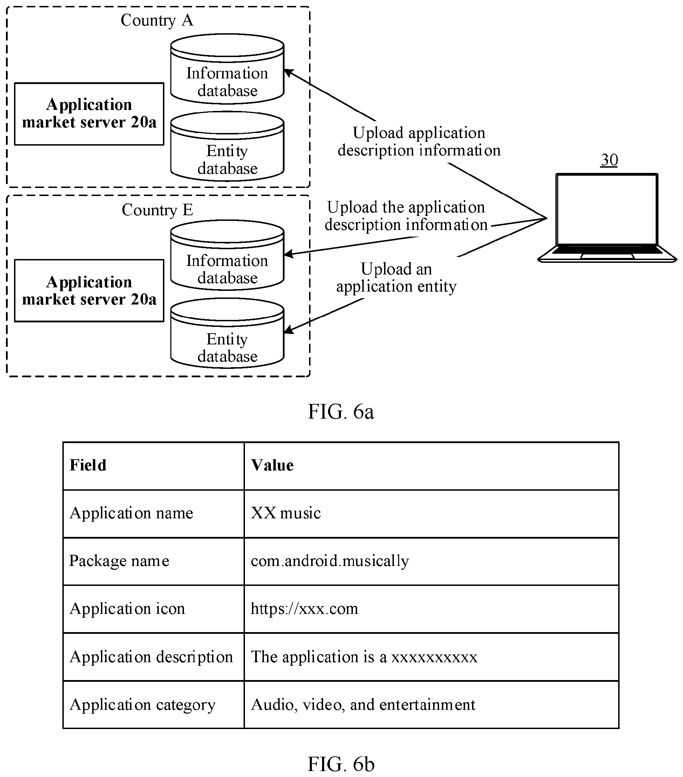

FIG. 6a is a diagram of a process of releasing application description information and an application entity according to an embodiment of this application;
FIG. 6b is a diagram of composition of release information of application description information according to an embodiment of this application;

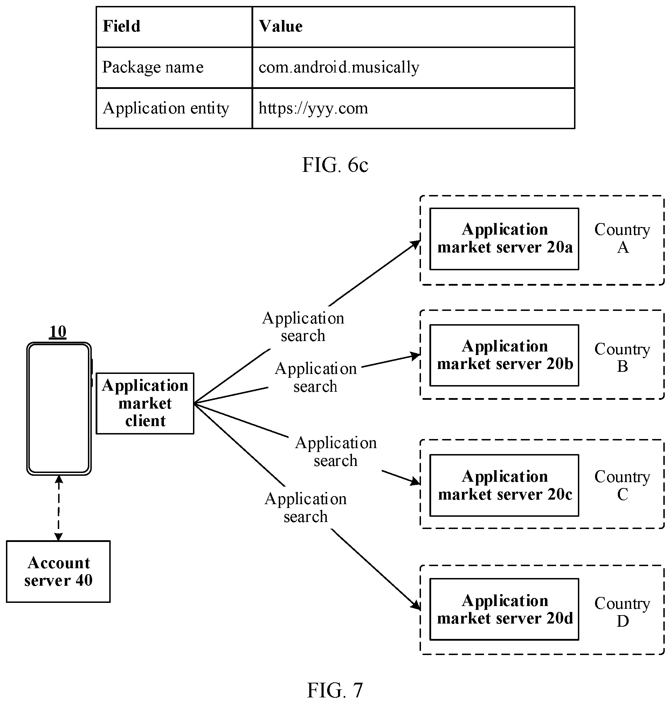

FIG. 6c is a diagram of composition of release information of an application entity according to an embodiment of this application;
FIG. 7 is a diagram of a matching process in which an application market server performs application description information matching in response to a search request according to an embodiment of this application;

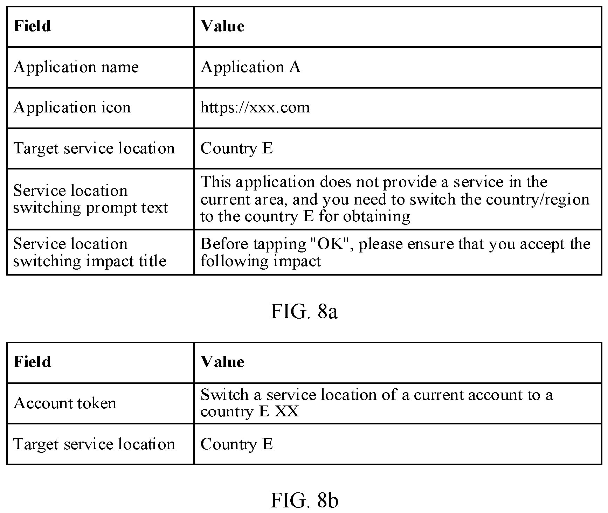

FIG. 8a is a diagram of information composition of a data table for setting prompt information related to a first application according to an embodiment of this application;
FIG. 8b is a diagram of information composition of a data table for setting a related instruction of service location switching needed for downloading a first application according to an embodiment of this application;

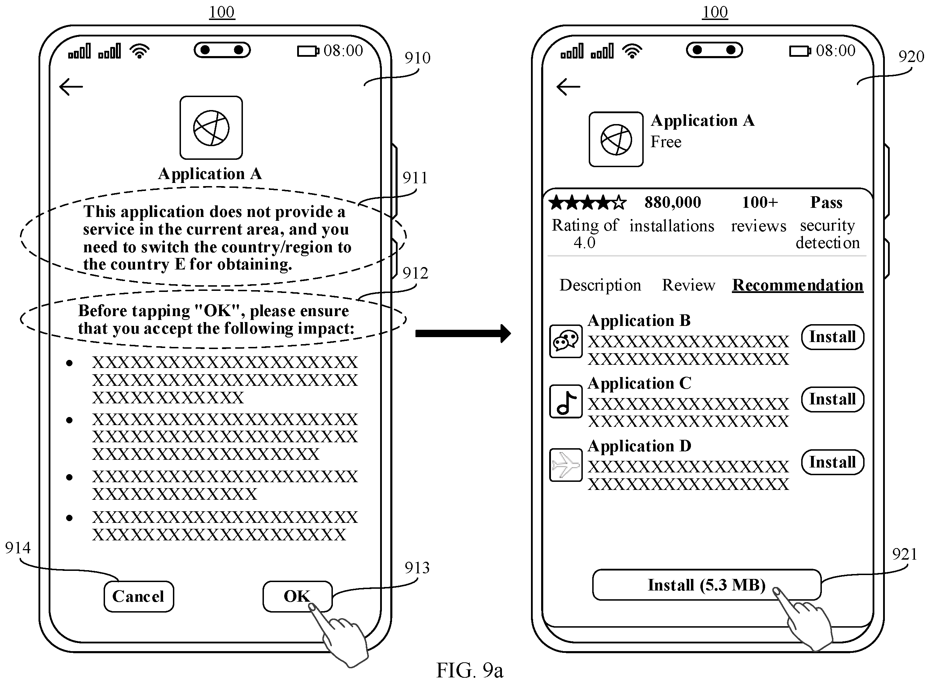

FIG. 9a is a diagram of a change of an interface correspondingly displayed by a mobile phone in response to an operation that a user determines to perform service location switching according to an embodiment of this application;

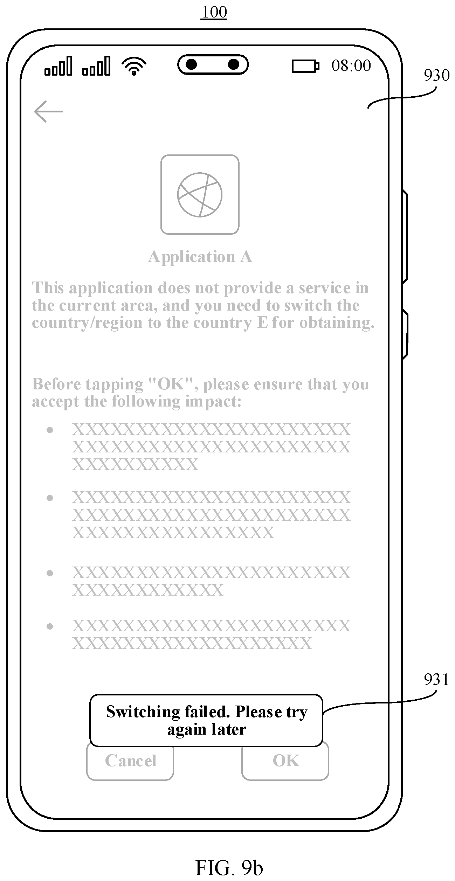

FIG. 9b is a diagram of a prompt interface for a switching failure according to an embodiment of this application;

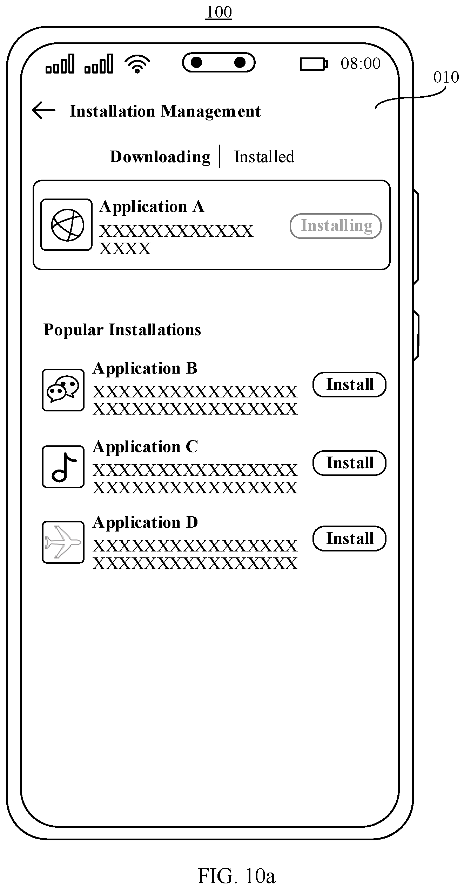

FIG. 10a is a diagram of an installation management interface for prompting that downloading is completed according to an embodiment of this application;

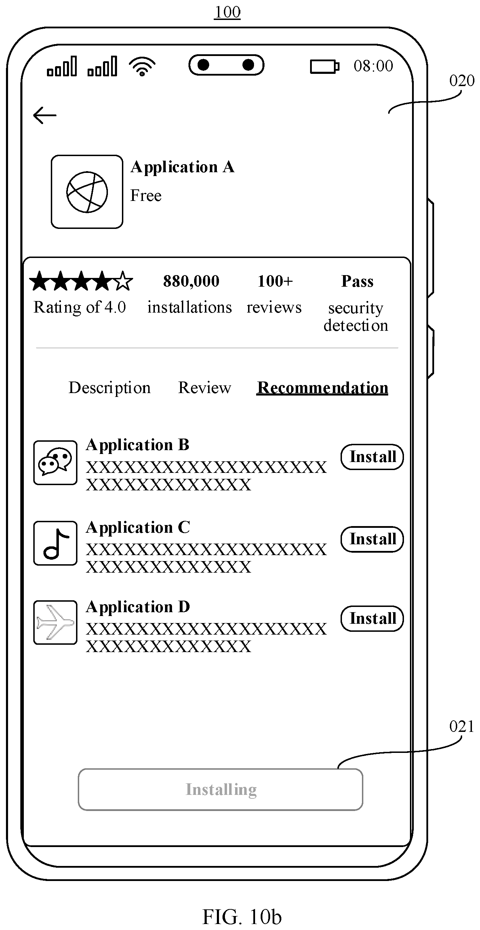

FIG. 10b is a diagram of an application installation interface for prompting that downloading is completed according to an embodiment of this application;

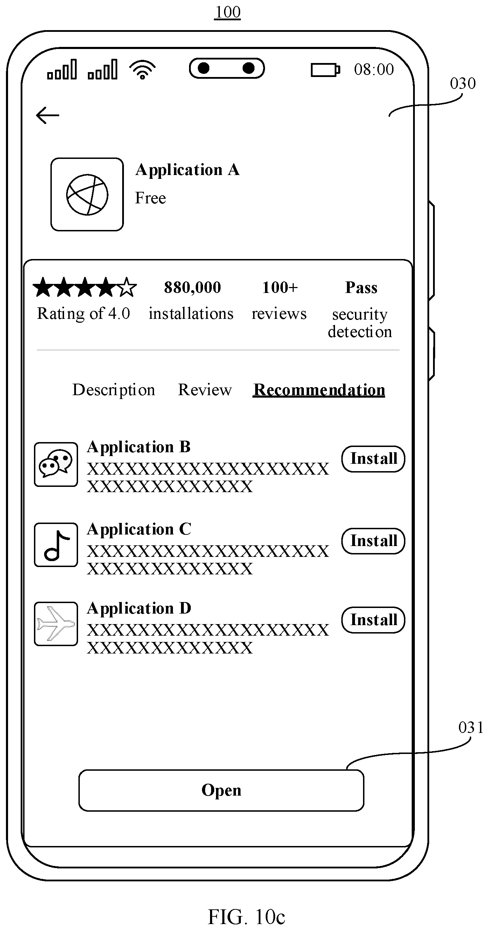

FIG. 10c is a diagram of an application installation interface for prompting that installation is completed according to an embodiment of this application;

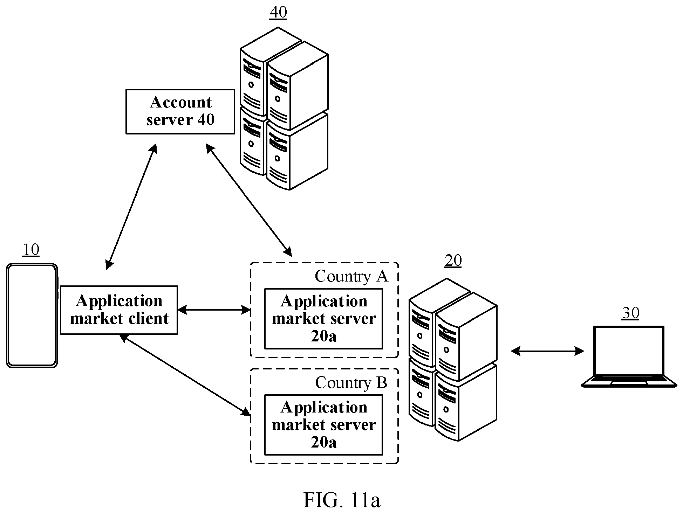

FIG. 11a is a diagram of an application scenario of another download method according to Embodiment 2 of this application;
FIG. 11b-1 to FIG. 11b-3 are a diagram of an implementation procedure of another download method according to Embodiment 2 of this application;

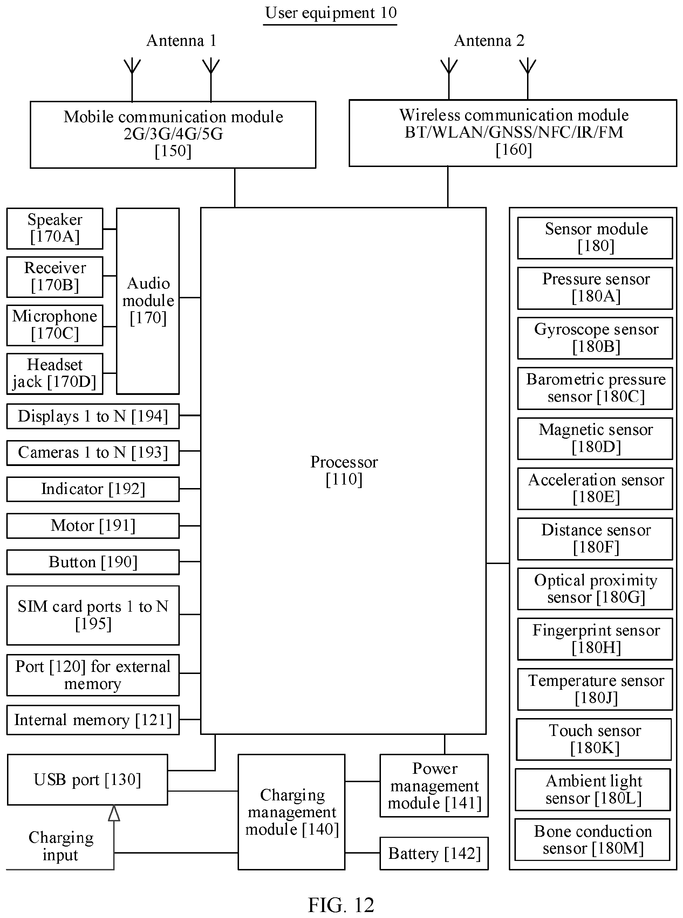

FIG. 12 is a diagram of a hardware structure of a user equipment according to an embodiment of this application; and

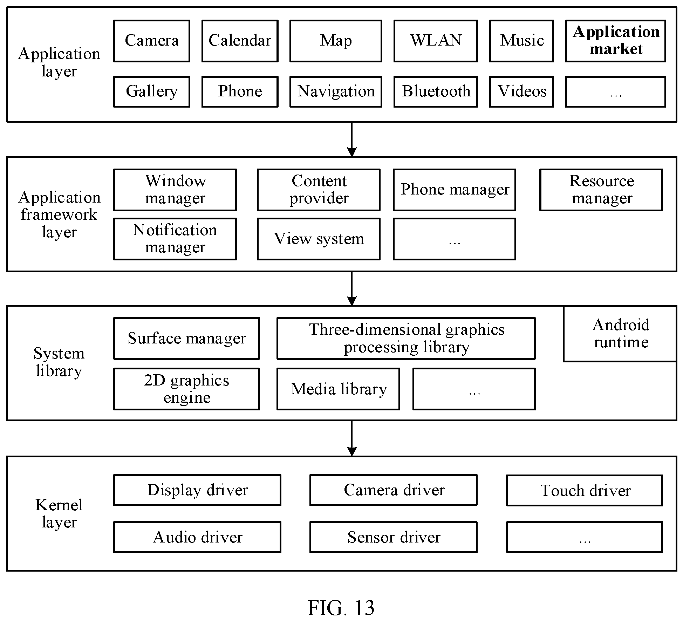

FIG. 13 is a diagram of a software structure of an operating system of a user equipment according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

It may be understood that a terminal device in embodiments of this application may also be referred to as a terminal (terminal), a user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

It should be further declared that, in embodiments of this application, the steps in the method and the procedure are numbered for ease of reference, instead of limiting a sequence. If there is a sequence between the steps, the text description shall prevail.

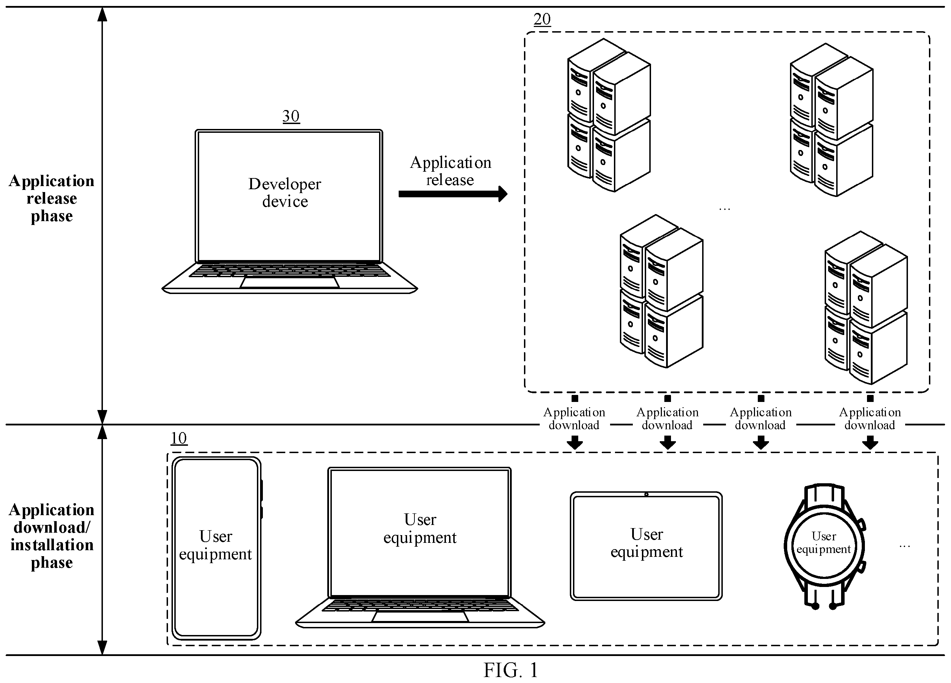

FIG. 1 is a diagram of an application release and download scenario to which a download method is applicable.

As shown in FIG. 1, the scenario includes user equipments 10, servers 20, and a developer device 30, and relates to an application release phase and an application download/installation phase. The user equipment 10 may access the server 20 by running an installed application market (an application for downloading), obtain an application installation package searched for by a user, for example, an Android^{™} package (apk for short), and further download and install a corresponding application in response to a related operation of the user. The developer device 30 may release a package of a developed application installation on the server 20 for the user equipment 10 to download.

The application release phase may include an "application release" process shown in FIG. 1. Development personnel (also referred to as a developer) or operation personnel may release the developed application on the server 20 by using the developer device 30. The application download/installation phase may include an "application download" process shown in FIG. 1. In response to a user operation, the user equipment 10 may search for, based on an application name or related description information input by the user, an application specified by the user, and access the server 20 to obtain a corresponding application installation package, for further installation, running, and the like.

It may be understood that release of an application is area-specific. For example, an application can be downloaded in a country A or a region A. This is because, in the application release phase, an installation package and related information that correspond to the application are uploaded to a server for an area to which a specified country or region belongs, and the server stores, based on the specified country or region, the uploaded installation package and related information that correspond to the application, and opens the installation package and related information to a user equipment served in the specified country or region for searching and downloading. Therefore, if a service location currently set for the user equipment that searches for the foregoing application is a country or region (other than the country A or the region A), for example, a country B, because the corresponding accessed server does not store the related information about the corresponding application, the corresponding application cannot be found, let alone be downloaded.

It may be understood that the user equipment 10 may include various types of terminal devices such as a notebook computer, a mobile phone, a tablet computer, and a smartwatch. This is not limited herein. The server 20 may include an application server, or may include a file server, a database server, and the like. This is not limited herein. As a terminal device used by the development personnel or the operation personnel, the developer device 30 may also include electronic devices such as a notebook computer, a tablet computer, and a desktop computer. This is not limited herein. The development personnel or the operation personnel may include but are not limited to technical personnel or management personnel who contribute to development work of a corresponding application.

As described above, because different applications may be released in different countries or regions, a current application market cannot meet a requirement of the user for downloading an application released at another service location outside a current country or region. To resolve this problem, currently, some user equipments 10 may support service location switching, and then search for an application released at a corresponding service location for downloading and installation.

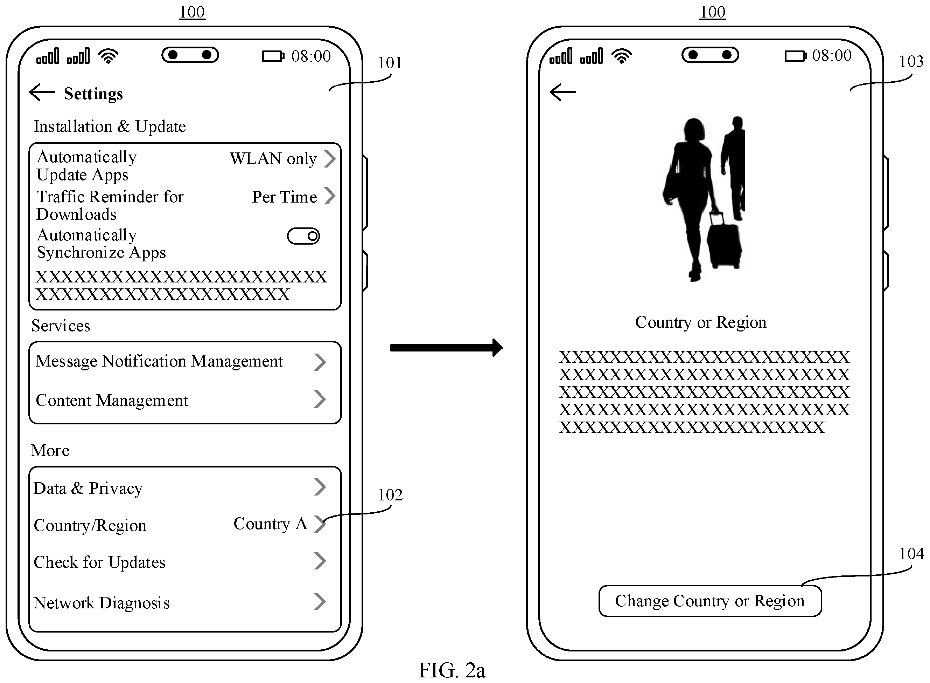

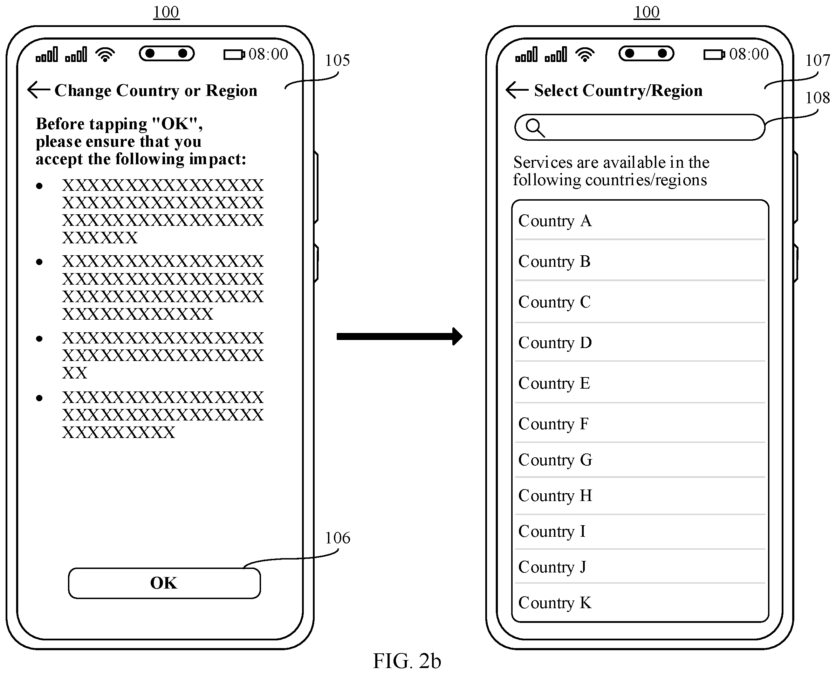

Refer to FIG. 2a. The user may select a "Country/Region" option 102 on a setting interface 101 of an application market running on a mobile phone 100, to enter a setting interface 103. Generally, a country displayed by default in the "Country/Region" option 102 may be a service location associated with a current login account on the mobile phone 100, for example, a country A. Further, the user may tap a "Change Country or Region" option 104 on the setting interface 103, and select a country or region to which the user wants to switch. Correspondingly, when the user performs an operation for the service location, the mobile phone 100 may display a prompt interface 105 shown in FIG. 2b, to remind the user of possible impact caused by the service location switching. If the user taps an "OK" control 106, the user equipment 10 like the mobile phone 100 may display a service location option interface 107.

Still refer to FIG. 2b. The service location option interface 107 may display various countries or regions supported for switching, including countries A to K shown in FIG. 2b. The user may slide upward on the interface 107 to find a country or region to which the user wants to switch, or the user may input, in a search box 108 on the interface 107, a name of the country or region to which the user wants to switch, to search for a service location and perform switching.

After the service location switching is completed, the application market running on the mobile phone 100 may access a server 20 for a service area to which a service location (for example, a country or region) after the switching belongs, search for an application installation package specified by the user, and perform downloading and installation. Based on this, the application market may essentially be an application that provides a download function, in other words, an application for downloading. This is not limited herein.

However, in a manner in which a requirement of the user for downloading an application released at another service location is met through service location switching shown in FIG. 2a and FIG. 2b, operations are complex, and the user needs to know in advance a country or region in which an application that the user wants to download/install is correspondingly released. If the user does not know the country or region, the user cannot accurately find, in the foregoing manner, the application released at the another service location. In this case, user experience is still poor.

Therefore, currently, a resource management solution that can help the user download an application released at another service location is urgently needed.

To resolve the foregoing problem, this application provides a download method. Specifically, in the method, in a release phase of a resource like an application, when application description information (namely, resource description information) and an application entity (namely, a resource entity) are released on a server for an area to which a specified service location belongs, the application description information is also synchronously released on servers for a plurality of areas. In this way, when a user searches for a resource like an application in an application market or the like on a user equipment, the user equipment can find, without an obstacle, the application description information released on the server for each area, and provide an application search result for the user based on the found application description information. This helps improve user experience in searching for applications in the application market. The application description information may include related information indicating a service location (for example, a country or region) specified for releasing the application. The application entity may be a file like an installation package of the application, and may also be referred to as a resource file.

Based on this, if the user wants to further view detailed information about the found application and download the resource like the application, the user equipment may switch, based on related information that is about a server for an area in which the service location specified for releasing belongs and that is in the application description information, from a currently set service location to the service location specified for releasing the resource. In this way, the user can quickly switch to the service location (for example, the country or region) at which the corresponding application is released without a need of manually switching the service location currently set for the user equipment, download/obtain an application entity on the server for the area to which the service location belongs, and perform further installation, running, and the like. In this way, in a process of downloading the corresponding application across service locations, user operations are greatly simplified. This helps improve use experience of an application for downloading like the application market.

It may be understood that a type of a resource to which the download method provided in this application is applicable, in other words, the foregoing released or downloaded resource, may not be limited to the foregoing application. In some other embodiments, the foregoing released resource or the like may also include music, a video, and the like. This is not limited herein. Correspondingly, the corresponding resource description information may be, for example, music description information or video description information, and the corresponding resource entity may be, for example, a music file or a video file. This is not limited herein.

It may be understood that the servers, for the plurality of areas, on which the application description information is released may include servers for areas to which a plurality of countries or regions in which an application can be released belong, or include servers for areas to which countries or regions correspondingly planned in a business plan in which the application participates belong, and the like. The service location at which the application entity is released may be one or more countries or regions covered by an area corresponding to one or more servers in the servers for the areas, or may be one or more countries or regions covered by an area corresponding to a same server.

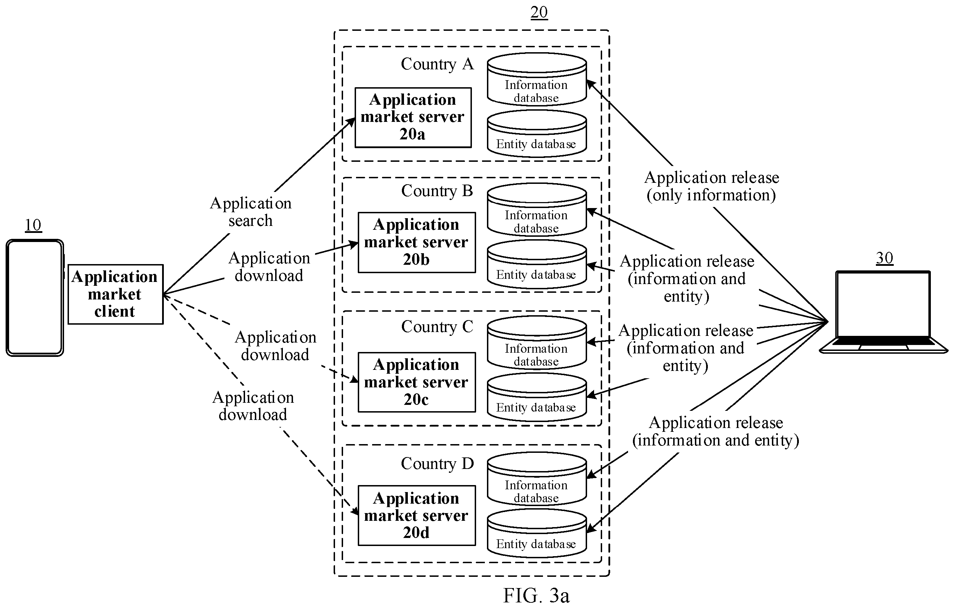

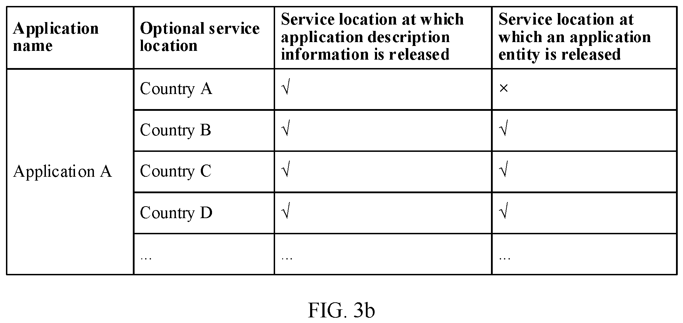

Refer to FIG. 3a. For example, development personnel may release, by using a developer device 30, application description information of an application A on servers for areas to which a country A, a country B, a country C, and a country D belong, and release an application entity on a server other than the server for the area to which the country A belongs, in other words, release the application entity only on the servers for the areas to which the country B, the country C, and the country D belong. For example, when releasing the application description information of the application A, the development personnel may select a plurality of countries shown in FIG. 3b, including the country A, the country B, the country C, the country D, and the like, all of which may be in a selected state. When the application entity of the application A is released, some countries may be selected or some countries may not be selected for release. For example, as shown in FIG. 3b, the country A is in an unselected state, and the country B, the country C, the country D, and the like are in the selected state. FIG. 3b may show a release rule set by the development personnel for the application A.

The application description information may be stored in an information database of a corresponding server, and the application entity may be stored in an entity database of the corresponding server. When an application market client running on a user equipment 10 searches an application market server for the area to which the country A belongs for an application, application description information corresponding to the application may be obtained without an obstacle, so that a search result of the application may be displayed on the application market client.

Still refer to FIG. 3a. When the user chooses to view detailed information, about the application, correspondingly displayed in the search result and download the application, the application market client running on the user equipment 10 may switch a service location to the country B, the country C, or the country D, to access the servers for the areas to which the country B, the country C, and the country D belong, and obtain the application entity of the application on the servers for the areas.

When service location switching is performed, the application market client running on the user equipment 10 may present, to the user, a prompt interface indicating that the service location switching is to be performed for downloading a corresponding application. In addition, the user equipment 10 may initiate a service location switching process after the user determines to perform service location switching. A specific implementation process of the service location switching initiated by the user equipment 10 is described in detail below with reference to a related service. Details are not described herein.

As described above, a response interface correspondingly displayed, in response to the user searching for an application or searching for music, a video, or the like, by the user equipment 10 based on the download method provided in this application is different from an existing corresponding interface. For example, in response to an operation that the user searches for an application resource in the application market, the user equipment 10 may display, when displaying a search result of the application resource, a control for the user to perform an operation of viewing or installing the application. In response to an operation that the user searches for a music resource in a music application or searches for a video resource in a video application, the user equipment 10 may display, when displaying a search result of the music resource or the video resource, a control for the user to perform an operation of playing or downloading the music or the video, and the like. This is not limited herein.

For example, FIG. 4a-1, FIG. 4a-2, and FIG. 4b are diagrams of related interfaces for searching for and downloading an application in an application market.

Refer to FIG. 4a-1 and FIG. 4a-2. Based on the download method provided in this application, the user inputs, on a search interface 410 of the application market, a name of an application that the user wants to search for, for example, an application A. The application A may be an application released in a country B, but a service location currently set for a mobile phone 100 is the country A. When the user completes the input and taps "Search" in a search box 411, the mobile phone 100 can still match a search result of the application A. The search result may include, for example, an "application A" whose name is the same as the application name input by the user, and an "application A1", an "application A2", and the like whose names are similar to the application name input by the user. This is not limited herein. The "application A1", the "application A2", and the like may be applications released at another service location.

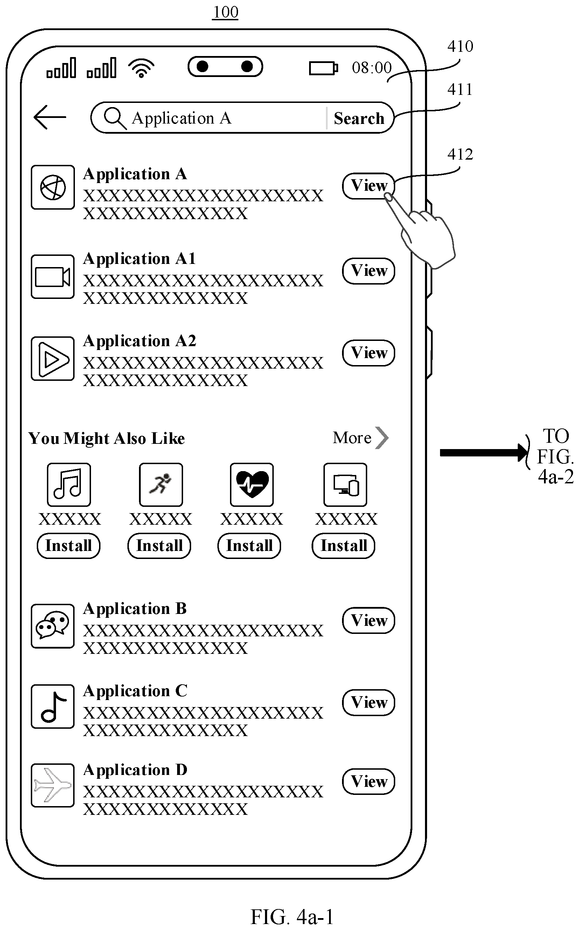

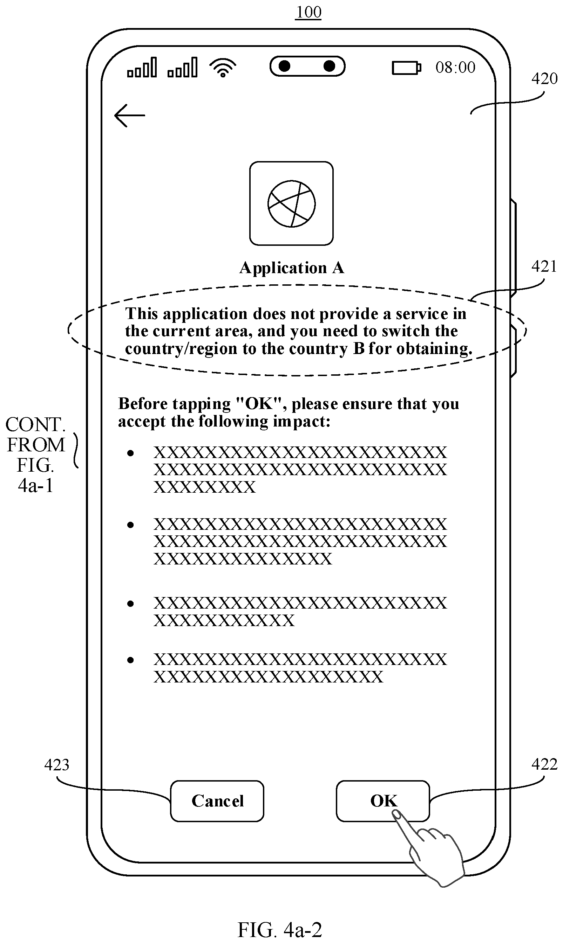

In addition, applications that the user may like may be further recommended to the user on the search interface 410. Refer to applications in a "You Might Also Like" part shown in FIG. 4a-1, and an application B, an application C, an application D, and the like that may be related to the application A searched by the user. These applications may be matched and displayed based on application description information released in a plurality of countries or regions. The countries or regions in which these applications are correspondingly released may be the service location currently set for the mobile phone 100, and may be another service location different from the service location currently set for the mobile phone 100. This is not limited herein.

Still refer to FIG. 4a-1 and FIG. 4a-2. When the user taps, on the search interface 410, a view control 412 corresponding to the "Application A", the mobile phone 100 may display a prompt interface 420 in response to the user operation. Prompt information 421 may be displayed on the prompt interface 420, to prompt the user to switch the currently set service location to any one of the country B to the country D to obtain a corresponding application entity resource. For example, content displayed in the prompt information 421 may be, for example, "This application does not provide a service in the current area, and you need to switch the country/region to the country B for obtaining". In some embodiments, the prompt information 421 may further include reminder content about impact that may be caused by performing service location switching by the user. Details are not described herein. A corresponding manner for determining a service location that is for switching and that is prompted by the prompt information 421 may include but is not limited to the following:
1. determining, based on a preset target switching location, the prompted service location for the switching, where the target switching location may be set in a corresponding data table; and for the data table, refer to FIG. 8a and related descriptions below, and details are not described herein;
2. determining, based on a selection operation of the user on a related selection interface, the prompted service location for the switching;
3. preferentially determining, as the prompted service location for the switching, a country or region in a same area as the current service location based on an area to which each country having the application entity resource belong;
4. preferentially determining, based on frequency of selecting a country or region by the user for switching, a country or region frequently selected by the user as the prompted service location for the switching;
5. preferentially determining, based on a quantity of downloads/installations of the application searched by the user in each country or region in which the application is correspondingly released, a country or region with a large quantity of downloads as the prompted service location for the switching; and
6. determining, based on a release location of a latest version corresponding to the searched application, a country or region in which the latest version is available as the prompted service location for the switching.

On the prompt interface 420, the user may tap an "OK" control 422 to determine to perform service location switching, or may tap a "Cancel" control 423 to cancel the service location switching.

Refer to FIG. 4b. If the user taps the "OK" control 422 on the prompt interface 420, the mobile phone 100 may display an application download interface 430 in response to the user operation. More information related to the application A may be displayed on the application download interface 430, for example, a rating of the application A, statistics on a quantity of downloads/installations, reviews uploaded by the user based on use experience, and related information indicating that "Pass security detection". An installation control 431 may be further displayed on the application download interface 430. A data size of the application entity corresponding to the application A, for example, "5.3 MB", may be displayed on the installation control 431. This is not limited herein. If the user taps the installation control 431, the application market running on the mobile phone 100 may be triggered to download the application A. After the download is completed, the application market running on the mobile phone 100 may continue to install the application A.

It may be understood that, the application download interface shown in FIG. 4b may be generated based on an application entity resource provided by a server for an area to which the service location to which the user equipment 10 switches, for example, the country B, belongs, in other words, related information about an application released at the service location after the switching, for example, the country B, may be correspondingly displayed on the interface.

According to the download method provided in this application, the server 20 may feed back, in response to an application search request initiated by the application market, a search result to the application market based on the application description information released in the plurality of countries or regions, and may further provide, for the application market, an application entity download link or a resource access link corresponding to a found matching result. Based on this, in some embodiments of this application, the server 20 may include application market servers for the foregoing areas. In other words, the servers for the areas to which the country A, the country B, the country C, and the country D belong shown in FIG. 3a may all be the server 20. To distinguish between the application market servers for the areas, in the following descriptions, the application market servers for the foregoing areas may be separately described as: application market server 20a for the area to which the country A belongs, application market server 20b for the area to which the country B belongs, application market server 20c for the area to which the country C belongs, and application market server 20d for the area to which the country D belongs.

It may be understood that, if an area to which a service location to which the user equipment 10 correspondingly switches in response to an operation that the user downloads an application belongs is the same as an area to which the service location currently set for the user equipment 10 belongs, in other words, the servers 20 that are correspondingly accessed are an application market server for a same area, for example, the application market server 20a for the area to which the country A belongs, after the service location switching, the user equipment 10 may continue to send, to the application market server 20a, a download request corresponding to the searched application, to obtain a corresponding application entity resource.

If an area to which a service location to which the user equipment 10 correspondingly switches in response to an operation that the user downloads an application belongs is different from the area to which the service location currently set for the user equipment 10 belongs, in other words, the servers 20 that are correspondingly accessed are application market servers for different areas, for example, the application market server 20b for the area to which the country B belongs and the application market server 20a for the area to which the country A belongs, after the service location switching, the user equipment 10 may send, to the server (for example, the application market server 20b) for the area to which the service location after the switching belongs, a download request corresponding to the searched application, to obtain a corresponding application entity resource.

It may be understood that the process in which the application market switches, after the user determines to switch, the service location to the country or region in which the application is correspondingly released may include a process in which the server 20 requested by the application market sends a service location switching instruction to an account server associated with an account logged in on the corresponding user equipment, and a process in which the account server changes, in response to the instruction, a service location associated with the account logged in on the user equipment to the country or region in which the found application is correspondingly released. In addition, the download method provided in this application may include release management of corresponding resources in a release phase of the corresponding resources, and search and download management of the corresponding resources in a download phase of the corresponding resources. This is not limited herein.

The following continues to use an application as an example to describe in detail a specific implementation process of the download method provided in this application with reference to embodiments of different scenarios and related accompanying drawings.

The following first describes, with reference to Embodiment 1, a specific implementation process of the download method provided in this application in a scenario in which an area to which a service location before switching belongs is the same as an area to which a service location after switching belongs.

### Embodiment 1

In this embodiment of this application, an area to which a service location before a user equipment 10 performs switching belongs may be the same as an area to which a service location after the user equipment 10 performs switching belongs. Correspondingly, a server accessed by an application market client running on the user equipment 10 before service location switching may be the same as a server accessed by the application market client running on the user equipment 10 after the service location switching.

FIG. 5a is a diagram of an application scenario in which a server correspondingly accessed by an application market client before service location switching is the same as a server correspondingly accessed by the application market client after the service location switching according to an embodiment of this application.

As shown in FIG. 5a, a service location of the application market client running on a user equipment 10 before the switching is, for example, a country A, and a service location after the switching is, for example, a country E or a country F. However, application market servers for areas to which the country A and the country E or the country F belong are all an application market server 20a. The service location set for the user equipment 10 before the switching may be set by an account server 40 corresponding to an account logged in on the user equipment 10. A process in which the user equipment 10 performs service location switching may be implemented through interaction between the application market server 20a and the account server 40.

In the scenario shown in FIG. 5a, both before and after the service location switching, the user equipment 10 may access the application market server 20a to query application description information and download an application entity resource. As described above, the application description information and the application entity resource may be uploaded and released by development personnel by using a developer device 30.

For example, FIG. 5b-1 and FIG. 5b-2 are a diagram of an implementation procedure of a download method according to an embodiment of this application. The implementation procedure relates to interaction between the user equipment 10, the application market server 20a, the developer device 30, and the account server 40.

Specifically, as shown in FIG. 5b-1 and FIG. 5b-2, the implementation procedure may include the following steps 501 to 521.

501: The application market server 20a obtains the application description information and the application entity that are uploaded by the developer device 30, where the application description information is released on servers for a plurality of areas.

For example, after completing development and testing in an application development phase, the development personnel or operation personnel may release a corresponding application to a specified country or region by using the developer device 30. The specified country or region is a service location at which the application entity is released. In addition, the development personnel or the operation personnel may synchronously release the application description information of the corresponding application at more service locations, for example, synchronously release the application description information on servers for a plurality of areas. The plurality of areas may cover the service location currently set for the user equipment 10 and a service location specified for releasing the application entity. This is not limited herein.

It may be understood that the essence of the foregoing release process is generally a process of uploading related data of a developed application to a server for an area to which a specified country or region belongs. The related data of the application may include application description information for describing the corresponding application, and an application entity for installing the corresponding application. The application description information may be represented in a form of text, character string, or the like. As information for identifying the corresponding application, the application description information includes at least identification information of the corresponding application, for example, application name, package name, and application icon (icon). The application description information may further include related information like application descriptions for describing the application and an application category corresponding to a type to which the application belongs.

For example, FIG. 6a is a diagram of a process of releasing application description information and an application entity according to an embodiment of this application.

As shown in FIG. 6a, when releasing an application by using the developer device 30, the development personnel may choose to upload the application description information to application market servers for areas to which the country A, the country E, and more countries belong, and the application description information may be correspondingly stored in an information database of each of the servers. In addition, when releasing the application by using the developer device 30, the development personnel may choose to release the application entity in the country E but not in the country A. In some other embodiments, when releasing the application by using the developer device 30, the development personnel may alternatively choose to release the application entity in the country A but not in the country E. However, in this embodiment of this application, an area to which the country A belongs may be the same as an area to which the country E belongs. The application market server 20a for the area may separately allocate, in an information database and an entity database, data storage spaces isolated from each other to the country A and the country E. To be specific, the application description information may be uploaded to data storage spaces allocated by the application market server for each area to a plurality of countries, and the application entity may be uploaded to a data storage space corresponding to the country or region specified for releasing. This is not limited herein.

It may be understood that the service location currently set for the user equipment 10 may also be referred to as a use location, namely, a service location used by the application market client running on the user equipment 10. Based on this, the service location currently set for the user equipment 10 may also be described as a currently set use location.

For example, FIG. 6b is a diagram of composition of release information of application description information according to an embodiment of this application.

As shown in FIG. 6b, the release information corresponding to the application description information released by the developer device 30 may include but is not limited to fields such as application name (a corresponding value is "XX music"), package name (a corresponding value is "com.android.musically"), application icon (a corresponding value is "https://xxx.com"), and application description (a corresponding value is "The application is a xxxxxxxxxx"), and application category (a corresponding value is "audio, video, and entertainment"). This is not limited herein.

Refer to FIG. 3a. The application description information may be uploaded to the information database provided by the application market server 20a for storage and management, and then the application market server 20a may match, by using application description information that corresponds to various applications and that is stored in the information database, an application searched by a user on the user equipment 10 to corresponding application description information. For details, refer to the following related steps and descriptions. Details are not described herein.

The application entity may be an installation package of a corresponding application. For a user equipment 10 equipped with an Android^{™} system, the application entity may be an executable file of a ".apk" type.

For example, FIG. 6c is a diagram of composition of release information of an application entity according to an embodiment of this application.

As shown in FIG. 6c, the release information corresponding to the application entity released by the developer device 30 may include but is not limited to fields such as package name (a corresponding value is "com.android.musically") and application entity (a corresponding value is "https://yyy.com").

It may be understood that the package name and the value of the package name for the application description information shown in FIG. 6b may correspond to the package name and the value of the package name for the application entity shown in FIG. 6c, and the package name and the value of the package name for the application description information shown in FIG. 6b may be the same as the package name and the value of the package name for the application entity shown in FIG. 6c. In addition, the application icon (icon) and the value of the application icon shown in FIG. 6b may correspond to the application entity and the value of the application entity shown in FIG. 6c, and read paths "https://xxx.com" and "https://yyy.com", corresponding to the application icon shown in FIG. 6b and the application entity shown in FIG. 6c may correspond to a same directory or subdirectory.

Refer to FIG. 3a. The application entity may be uploaded to the entity database provided by the application market server 20a for storage and management, and then the application market server 20a may match, by using application entities that correspond to various applications and that are stored in the entity database, an application searched by the user on the user equipment 10 to a corresponding application entity. For details, refer to the following related steps and descriptions. Details are not described herein.

502: The user equipment 10 detects an operation that the user searches for a target application.

For example, the user may search for, by using the user equipment 10, an application that the user wants to install, in other words, the target application. The target application may be a payment application, a browser application, a game application, a music application, a video application, or the like. This is not limited herein. Correspondingly, the application market client running on the user equipment 10 may detect the operation that the user searches for the target application, and may continue to perform the following step 503 in response to the user operation, to request a corresponding application market service end to search for the target application.

503: The user equipment 10 sends a search request for the target application to the application market server 20a.

For example, the search request may carry identification information like an application name of the target application. The application market service end may be deployed on the application market server 20a, and is configured to respond to a request initiated by the application market client. When detecting the operation that the user searches for the target application, the application market client running on the user equipment 10 may send the search request for the target application to the application market server 20a. The request may be for requesting the application market service end to search the information database provided by the application market server 20a for related information about the target application, for example, application description information corresponding to the target application.

504: The application market server 20a obtains, through matching, the application description information of the target application in response to the search request.

For example, the application market server 20a obtains, through matching from the information database in response to the received search request for the target application, the application description information related to the target application. Refer to FIG. 6a. For example, the application market server 20a may obtain, through matching based on the application name of the target application, the application description information corresponding to the target application. The application description information may include the application name, a package name, an application icon (icon), and the like of the target application, and may include text, a character, and the like corresponding to application descriptions.

It may be understood that the application market server 20a may search, based on information like the application name carried in the search request, the information database for application description information that matches the information like the application name. In addition, when receiving the search request sent by the user equipment 10, the application market server 20a may also obtain related information about a service location correspondingly set for an account logged in on the user equipment 10.

For example, FIG. 7 is a diagram of a matching process in which an application market server performs application description information matching in response to a search request.

As shown in FIG. 7, the application market client running on the user equipment 10 may initiate, to the application market server 20a based on a use location set by the account server 40 that is correspondingly accessed by using the logged-in account, in other words, the currently set service location, a search request for searching for an application. Correspondingly, the server 20a for the area to which the country A belongs may search, in response to the search request, whether the application description information of the corresponding application is stored. It may be understood that the search process may include a process of performing searching in the data storage spaces allocated to the country A and the country E in the information database of the server 20a. Details are not described herein. Similarly, for related descriptions that a user equipment 10 whose current service location is a country or region in another area correspondingly searches an application market server for the area to which the current service location belongs for an application, refer to the following related descriptions in step 1104 in Embodiment 2. Details are not described herein.

505: The application market server 20a returns the application description information of the target application to the user equipment 10.

For example, the application market server 20a may return, as a search or a search result, the matched application description information of the target application to the application market client running on the user equipment 10.

506: The user equipment 10 displays, based on the application description information, a search result display interface for describing the target application.

For example, the user equipment 10 may display, based on the application description information that is of the target application and that is returned by the application market server 20a, the search result display interface corresponding to the target application. Related descriptions of the target application and the application icon (icon) of the target application may be presented on the search result display interface.

Refer to FIG. 4a-1 and FIG. 4a-2. In response to a search request corresponding to searching for the application A by the user, the user equipment 10 like the mobile phone 100 may interact with the application market server 20a to perform steps 503 to 506, and may display the search result displayed on the search interface 410. The search result may include, for example, an "application A" whose name is the same as the application name input by the user, and an "application A1", an "application A2", and the like whose names are similar to the application name input by the user. For details, refer to the related descriptions in FIG. 4a-1 and FIG. 4a-2. Details are not described herein again.

507: The user equipment 10 detects an operation that the user indicates, on the search result interface, to view the target application.

For example, for the operation, detected by the user equipment 10, in which the user indicates, on the search result interface, to view the target application, refer to the operation, shown in FIG. 4a-1 and FIG. 4a-2, in which the user taps, on the search interface 410, the view control 412 corresponding to the "application A". The operation may indicate the user equipment 10 to display more application-related information, a control that can be for downloading the application, and the like. For details, refer to the interface changes and related descriptions shown in FIG. 4a-1, FIG. 4a-2, and FIG. 4b. Details are not described herein again.

508: The user equipment 10 sends, to the application market server 20a, an obtaining request for a service location at which an application entity of the target application is correspondingly released.

For example, in response to the operation that the user indicates, on the search result interface, to view the target application, the user equipment 10 may send, to the application market server 20a, the obtaining request for the service location at which the application entity of the target application is correspondingly released. As described above, the service location at which the application entity is correspondingly released is a country or region specified by the development personnel or the operation personnel for releasing the corresponding application. Related information about the corresponding service location may also be stored in the entity database, and is stored together with the corresponding application entity.

509: The application market server 20a returns, to the user equipment 10, the service location at which the application entity of the target application is correspondingly released and/or service location switching prompt information.

For example, the application market server 20a may obtain, through matching in the entity database based on the related information that is about the target application and that is requested by the user equipment 10, the application entity corresponding to the target application, the related information about the service location at which the application entity is released, and the like. The matching process may be implemented, for example, by using information provided in a preset data table. For the data table, refer to FIG. 8a below. In addition, the application market server 20a may generate, based on preset service location switching prompt text, unified service location switching prompt information that can be displayed by the user equipment 10. In addition, a service location switching impact title displayed on a corresponding service location switching prompt interface displayed by the user equipment 10 may also be uniformly obtained from the application market server 20a.

For example, FIG. 8a is a diagram of information composition of a data table for setting prompt information related to a target application according to an embodiment of this application.

Refer to FIG. 8a. An example in which the target application is the application A is used. A data table corresponding to related information about the application A may include but is not limited to the following fields and corresponding values: application name (a corresponding value is "Application A"), application icon (a corresponding value is "https://xxx.com"), target service location (a corresponding value is "Country E"), service location switching prompt text (a corresponding value is "This application does not provide a service in the current area, and you need to switch the country/region to the country E for obtaining"), and service location switching impact title (a corresponding value is "Before tapping "OK", please ensure that you accept the following impact: XXXX"). The target service location is the country or region specified for correspondingly releasing the target application, for example, the country E.

FIG. 8b is a diagram of information composition of a data table for setting a related instruction of service location switching needed for downloading a target application according to an embodiment of this application.

Refer to FIG. 8b. The application market server 20a may further store an account token (token) that is correspondingly triggered to be sent to the account server when switching to the target service location is performed, and a value corresponding to the token may indicate the target service location to be switched to. For example, when the value of the account token (token) sent by the application market server 20a to the account server 40 is "switch a service location of a current account to the country E XX", the account server may be indicated to switch the service location to a server for an area to which the country E belongs.

In some embodiments, the application market server 20a may further correspondingly obtain, for the target application through matching based on the related information that is about the target application and that is requested by the user equipment 10, data that is stored in the entity database and that corresponds to a quantity of downloads of the target application in the application market, reviews of the target application, and the like. The data may be collected data fed back by each application market client to the application market server 20a in real time. Details are not described herein.

In some other embodiments, the service location and/or service switching prompt information correspondingly returned to the user equipment 10 in step 509 may alternatively be returned to the user equipment 10 together with the application description information of the target application when step 505 is performed. Correspondingly, the search request correspondingly sent, by the user equipment 10 when performing step 503, to the application market server 20a may carry a search request, in other words, an obtaining request, for the application description information, and an obtaining request for a server on which the application entity of the target application is released and/or the service location switching prompt information. This is not limited in this application.

510: The user equipment 10 displays the prompt information for prompting to perform service location switching.

For example, after receiving the related information about the service location specified for correspondingly releasing the target application, the service location switching prompt text and the service location switching impact title that are correspondingly preset for the target application, and the like that are returned by the application market server 20a, the user equipment 10 may display the corresponding prompt information for prompting to perform service location switching, corresponding prompt information for prompting impact of performing service location switching, and the like.

For example, refer to FIG. 9a. A prompt interface 910 displayed by the mobile phone 100 may display prompt information 911 and prompt information 912. The prompt information 911 may be for prompting, for example, "This application does not provide a service in the current area, and you need to switch the country/region to the country E for obtaining". For details, refer to the prompt information 421 displayed on the prompt interface 420 shown in FIG. 4a-2 and related descriptions. Prompt content of the prompt information 912 may be, for example, "Before tapping "OK", please ensure that you accept the following impact: XXXX", to remind the user to confirm the possible impact correspondingly caused by the service location switching, thereby avoiding adverse impact on user experience. An "OK" control 913 and a "Cancel" control 914 may be further displayed on the prompt interface 910. The "OK" control 913 is for determining to perform service location switching, and the "Cancel" control 914 is for cancelling the service location switching. For a specific result of an operation performed by the user on the control, refer to content performed in step 511 and related descriptions below. Details are not described herein.

In some other embodiments, the service location switching prompt information displayed by the user equipment 10 may alternatively be generated by the user equipment 10. For example, when obtaining the related information, returned by the application market server 20a, about the service location specified for releasing the corresponding application, the user equipment 10 may generate the prompt information for prompting to perform service location switching. This is not limited herein.

511: The user equipment 10 detects an operation that the user determines to perform service location switching.

For example, refer to FIG. 9a. If the user taps the "OK" control 913 on the prompt interface 910, it indicates that the user agrees to perform service location switching. Correspondingly, the user equipment 10 like the mobile phone 100 may detect the user operation, to be specific, may detect the operation that the user determines to perform service location switching. Then, the user equipment 10 like the mobile phone 100 continues to perform a process of interaction with the application market server 20a described in the following steps 512 to 516. Then, the user equipment 10 like the mobile phone 100 may display an application download interface 920 shown in FIG. 9a. For specific interaction and a further display interface change process, refer to steps and related descriptions below. Details are not described herein.

512: The user equipment 10 sends a service location switching request to the application market server 20a.

For example, the user equipment 10 may generate the corresponding service location switching request based on the operation that the user determines to perform service location switching, and send the request to the application market server 20a. The service location switching request may be for requesting to switch the service location currently set for the user equipment 10 to the service location specified for correspondingly releasing the target application, for example, the country E.

513: The application market server 20a sends a service location switching request to the account server 40.

For example, when obtaining the service location switching request initiated by the user equipment 10, the application market server 20a may initiate a service location switching request to the account server 40 corresponding to the account logged in on the user equipment 10, to request the account server 40 to reset a service location for the user equipment 10, for example, set, as the new service location of the user equipment 10, the country E specified for releasing the application entity.

It may be understood that, after the user equipment 10 is powered on for use, and before the user downloads a needed APP in the application market, the user generally needs to first log in to an owner account. In this login scenario, the user equipment 10 may initiate an account login request to the account server 40 based on a user operation of logging in to the account. Correspondingly, after successfully verifying related information about the account that is requested to be logged in, the account server 40 may return, to the user equipment 10, a result of successful account login and a correspondingly set service location. The service location may be, for example, a country or region selected by the user when the user registers an account on the user equipment 10, or a default country or region corresponding to an account enabled by default. This is not limited herein.

514: The account server 40 returns a service location switching success notification to the application market server 20a.

For example, the returned notification may include a result indicating that the service location is successfully switched or the service location switching is completed. The result may be a preset character string, text, or the like. This is not limited herein.

515: The application market server 20a returns the service location switching success notification to the user equipment 10.

516: The user equipment 10 updates the service location and displays a download interface corresponding to the target application.

For example, the user equipment 10 may refresh a related interface of the application market based on the received notification, or exit the application market and then run the application market again, to update the service location currently set in the application market.

For example, for the download interface displayed after the user equipment 10 updates the service location, refer to the application download interface 920 shown in FIG. 9a.

As shown in FIG. 9a, more information related to the application A may be displayed on the application download interface 920, for example, a rating of the application A, statistics on a quantity of downloads/installations, reviews uploaded by the user based on use experience, and related information indicating that "Pass security detection". An installation control 921 may be further displayed on the application download interface 920. A data size of an application entity corresponding to the application A, for example, "5.3 MB", may be displayed on the installation control 921. This is not limited herein. If the user taps the installation control 921, the application market running on the mobile phone 100 may be triggered to download the application A. For the download process, refer to FIG. 4b and related descriptions. Details are not described herein again.

In some other embodiments, the user equipment 10 may alternatively fail to perform service location switching when the user agrees to perform service location switching. For example, the user equipment 10, the application market server 20a, and the account server 40 fail to perform the process of steps 512 to 514, and the user equipment 10 may display a prompt interface 930 shown in FIG. 9b. As shown in FIG. 9b, a prompt box 931 may be displayed on the prompt interface 930. Content of prompt information displayed in the prompt box 931 may be, for example, "Switching fails. Please try again later" or other content. This is not limited herein.

It may be understood that, the user may tap the "Cancel" control 914 on the prompt interface 910 shown in FIG. 9a to cancel the service location switching, in other words, the user may alternatively refuse to perform service location switching. In this case, the user equipment 10 may return to a search interface of the application market in response to the user operation, for example, the search interface 410 shown in FIG. 4a-1.

517: The user equipment 10 detects an operation that the user indicates to download the target application.

For example, refer to FIG. 9a. The operation that the user indicates to download the target application may be, for example, an operation that the user taps the installation control 921 on the application download interface 920. Correspondingly, the user equipment 10 may detect the user operation, and then the following steps 518 to 521 continue to be performed to complete a process of downloading and installing the corresponding application.

518: The user equipment 10 sends, to the application market server 20a, a download request corresponding to the target application.

For example, the user equipment 10 may send the corresponding download request to the application market server 20a in response to the detected operation that the user indicates to download the target application. The download request may be for requesting the application market server 20a to obtain the application entity corresponding to the target application for installation, in other words, request to download the application entity corresponding to the target application.

It may be understood that, after the service location switching, the download request sent by the user equipment 10 may be sent to the server for the area to which the service location after the switching belongs. If the server for the area to which the service location after the switching belongs is the same as the service for the area to which the service location before the switching belongs, for example, both are the application market server 20a, the application market server 20a may continue to perform the following step 519 to respond to the download request.

519: The application market server 20a obtains, in response to the download request, the application entity corresponding to the target application.

For example, because the area to which the service location after the switching (for example, the country E) belongs is the same as the area to which the country A belongs, in response to the download request that is for the target application and that is sent by the user equipment 10, the application market server 20a may obtain, through matching from the entity database in which the application entity of the target application is correspondingly stored, the application entity corresponding to the target application. A server at a release location may be understood as a server for an area to which a release location of the target application belongs. The information database on the application market server 20a may store the application description information of the target application, and the entity database may store data like the application entity. Refer to FIG. 7. The application market server 20a having a related application entity resource may provide a response to the search request or the download request. For example, the application market server 20a may obtain, from the entity database for storing application entity resources, the application entity corresponding to the target application.

520: The application market server 20a returns, to the user equipment 10, the application entity corresponding to the target application.

For example, the application market server 20a may return, to the user equipment 10 as a response result of the download request, the application entity that is of the target application and that is obtained from the entity database, in other words, return the application entity corresponding to the target application to the user equipment 10.

521: The user equipment 10 displays an interface related to completion of the downloading or an interface related to the installation of the target application.

For example, after receiving the application entity that corresponds to the target application and that is returned by the application market server 20a, the user equipment 10 may display the interface indicating that the downloading is completed. Referring to an installation management interface 010 shown in FIG. 10a, an application that is being downloaded and an application that is downloaded and is in an "Installing" state may be displayed under a "Downloading" option on the installation management interface 010. It may be understood that, after installation of the application is completed, the application may be correspondingly displayed under an "Installed" option on the installation management interface 010 shown in FIG. 10a. Details are not described herein. It may be understood that "Installing" correspondingly displayed on the installation management interface 010 may indicate that the user equipment 10 is installing the target application. Therefore, the interface may also be described as the interface related to the installation of the target application.

In some other embodiments, for the interface that is related to the installation of the target application and that is displayed by the user equipment 10, refer to FIG. 10b or FIG. 10c.

As shown in FIG. 10b, an indication control 021 indicating that the application A is in the "Installing" state may be displayed on an application installation interface 020 displayed by the user equipment 10. As shown in FIG. 10c, an "Open" control 031 indicating that the installation of the application A is completed and that the application A can be opened and run may be displayed on an application installation interface 030 displayed by the user equipment 10. It may be understood that, on the application installation interface 020 shown in FIG. 10b, if installation of the application is completed, to be specific, the application is switched from the "Installing" state to the installed state, the application installation interface 020 correspondingly displayed by the user equipment 10 may change to the application installation interface 030 shown in FIG. 10b, and the indication control 021 may be correspondingly switched to the "Open" control 031. Details are not described herein.

It may be understood that the user equipment 10, the application market server 20a, the developer device 30, and the account server 40 may implement, based on the steps in the interaction procedure shown in FIG. 5b-1 and FIG. 5b-2, the download method provided in this application. According to the method, the user equipment 10 can find, without an obstacle, various versions of applications released on a server for a same area for different countries, to ensure that the user can find a desired application in the application market, thereby helping improve user experience. In addition, when the user wants to download and install a found application, the user equipment 10 can complete, through interaction between the application market server 20a and the account server 40, switching from a currently set service location to a service location at which the application is released, and download, from a server for a same area to which the service location at which the application is released and the service location before the user equipment 10 performs switching belong, an application entity resource corresponding to the application, to further install, run, and use the application. This process can be completed without a need of manually performing service location switching by the user, thereby helping improve user experience.

The following continues to describe, with reference to Embodiment 2, the specific implementation process of the download method provided in this application in a scenario in which the area to which the service location before switching belongs is different from the area to which the service location after switching belongs.

### Embodiment 2

In this embodiment of this application, an area to which a service location before a user equipment 10 performs switching belongs may be different from an area to which a service location after the user equipment 10 performs switching belongs. Correspondingly, a server accessed by an application market client running on the user equipment 10 before service location switching may be different from a server accessed by the application market client running on the user equipment 10 after the service location switching.

FIG. 11a is a diagram of a scenario in which a server correspondingly accessed by an application market client before service location switching is different from a server correspondingly accessed by the application market client after the service location switching according to an embodiment of this application.

As shown in FIG. 11a, a service location of the application market client running on the user equipment 10 before the switching is, for example, a country A, and a service location after the switching is, for example, a country B. However, an application market server for an area to which the country A belongs is an application market server 20a, and an application market server for an area to which the country B belongs is an application market server 20b. The service location set for the user equipment 10 before the switching may be set by an account server 40 corresponding to an account logged in on the user equipment 10. A process in which the user equipment 10 performs service location switching may be implemented through interaction between the application market server 20a and the account server 40.

In the scenario shown in FIG. 11a, before the service location switching, the user equipment 10 may access the application market server 20a to query application description information. In addition, after the service location switching, the user equipment 10 may access the application market server 20b to download an application entity resource. As described above, the application description information and the application entity resource may be uploaded and released by development personnel by using a developer device 30.

For example, FIG. 11b-1 to FIG. 11b-3 are a diagram of an implementation procedure of a download method according to an embodiment of this application. The implementation procedure relates to interaction between the user equipment 10, the application market server 20a, the application market server 20b, the developer device 30, and the account server 40.

Specifically, as shown in FIG. 11b-1 to FIG. 11b-3, the implementation procedure may include the following steps 1101 to 1121.

1101: The application market server 20a and the application market server 20b obtain the application description information uploaded by the developer device 30, and the application market server 20b obtains the application entity uploaded by the developer device 30.

For example, when releasing an application, the development personnel or operation personnel may upload application description information to an application market server corresponding to each area, for example, the application market server 20a or the application market server 20b. In some other embodiments, the server to which the application description information is uploaded may further include an application market server for another area, for example, the application market server 20c or the application market server 20d shown in FIG. 3.

1102: The user equipment 10 detects an operation that the user searches for a target application.

1103: The user equipment 10 sends a search request for the target application to the application market server 20a.

1104: The application market server 20a obtains, through matching, application description information of the target application in response to the search request.

For a specific process of performing steps 1102 and 1103, refer to related descriptions in steps 502 and 503 in Embodiment 1. Details are not described herein again.

Refer to FIG. 7. The user equipment 10 whose current service location is the country B may search the application market server 20b for the area to which the country B belongs for an application, to obtain application description information like a character string corresponding to the searched application. Similarly, the user equipment 10 whose current service location is a country C may search the application market server 20c for an area to which the country C belongs for an application, to obtain application description information of the searched application. The user equipment 10 whose current service location is a country D may search the application market server 20d for an area to which the country D belongs for an application, to obtain application description information of the searched application. Another example is not described.

1105: The application market server 20a returns the application description information of the target application to the user equipment 10.

1106: The user equipment 10 displays, based on the application description information, a search result display interface for describing the target application.

1107: The user equipment 10 detects an operation that the user indicates, on the search result interface, to view the target application.

1108: The user equipment 10 sends, to the application market server 20a, an obtaining request for a service location at which an application entity of the target application is correspondingly released.

1109: The application market server 20a returns, to the user equipment 10, the service location at which the application entity of the target application is correspondingly released and/or service location switching prompt information.

1110: The user equipment 10 displays prompt information for prompting to perform service location switching.

1111: The user equipment 10 detects an operation that the user determines to perform service location switching.

For a specific process of performing steps 1105 to 1111, refer to related descriptions in steps 505 to 511 in Embodiment 1. Details are not described herein again.

1112: The user equipment 10 sends a service location switching request to the application market server 20a.

1113: The application market server 20a sends a service location switching request to the account server 40.

For example, in this embodiment of this application, the sent service location switching request may indicate to switch a service location currently set for the application market client running on the user equipment 10 to the country B (namely, a target service location).

1114: The account server 40 returns a service location switching success notification to the application market server 20a.

1115: The application market server 20a returns the service location switching success notification to the user equipment 10.

For a specific process of performing steps 1112 to 1115, refer to related descriptions in steps 512 to 515 in Embodiment 1. Details are not described herein again.

1116: The user equipment 10 updates the service location and displays a download interface corresponding to the target application.

For example, after the user equipment 10 updates the service location, the correspondingly set service location is the service location after the switching, for example, the country B. In this case, the user equipment 10 displays the download interface corresponding to the target application, and the download interface may be generated by using related information that is about the application and that is provided by the application market server 20b for the area to which the country B belongs.

1117: The user equipment 10 detects an operation that the user indicates to download the target application.

1118: The user equipment 10 sends, to the application market server 20b, a download request corresponding to the target application.

For example, the user equipment 10 may send, based on the target service location after the switching, the download request to the application market server 20b for an area to which the target service location belongs. The download request may correspond to the target application, and is for requesting to obtain the application entity resource of the target application and the like.

1119: The application market server 20b accesses a server at a release location of the target application in response to the download request, to obtain the application entity corresponding to the target application.

For example, in response to the download request that is for the target application and that is sent by the user equipment 10, the application market server 20b may obtain, through matching from an entity database in which the application entity of the target application is correspondingly stored, the application entity corresponding to the target application.

1120: The application market server 20b returns, to the user equipment 10, the application entity corresponding to the target application.

For example, the application market server 20b may return, to the user equipment 10 as a response result of the download request, the application entity that is of the target application and that is obtained from the entity database, in other words, return the application entity corresponding to the target application to the user equipment 10.

1121: The user equipment 10 displays an interface related to completion of the downloading or an interface related to installation of the target application.

For example, after receiving the application entity that corresponds to the target application and that is returned by the application market server 20b, the user equipment 10 may display the interface indicating that the downloading is completed. For the interface, refer to FIG. 10a to FIG. 10c and related descriptions in Embodiment 1. Details are not described herein again.

It may be understood that the user equipment 10, the application market server 20a, the application market server 20b, the developer device 30, and the account server 40 may implement, based on the steps in the interaction procedure shown in FIG. 11b-1 to FIG. 11b-3, the download method provided in this application. According to the method, the user equipment 10 can find, without an obstacle, various versions of applications released on servers for each area, to ensure that the user can find a desired application in the application market, thereby helping improve user experience. In addition, when the user wants to download and install a found application, the user equipment 10 can complete, through interaction between the application market server 20a and the account server 40, switching from a currently set service location to a service location at which the application is released, and download, from a server for an area to which the service location at which the application is released belongs, an application entity resource corresponding to the application, to further install, run, and use the application. This process can be completed without a need of manually performing service location switching by the user, thereby helping improve user experience.

FIG. 12 is a diagram of a hardware structure of a user equipment according to an embodiment of this application. It may be understood that the user equipment may include, for example, a terminal like a mobile phone 100, a tablet computer, or a smartwatch. This is not limited herein.

The user equipment 10 may include a processor 110, a port 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card port 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the user equipment 10. In some other embodiments of this application, the user equipment 10 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

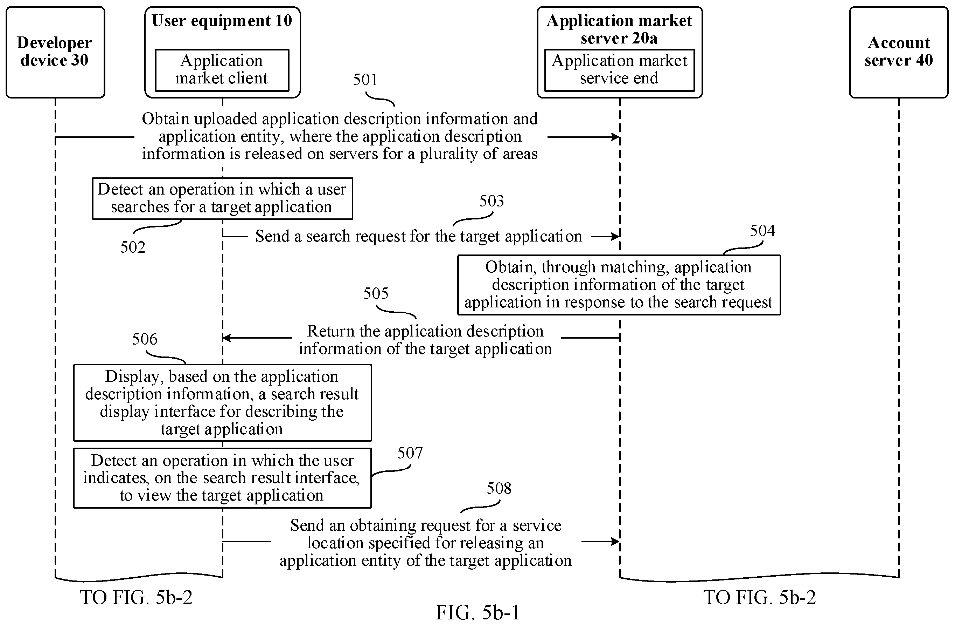

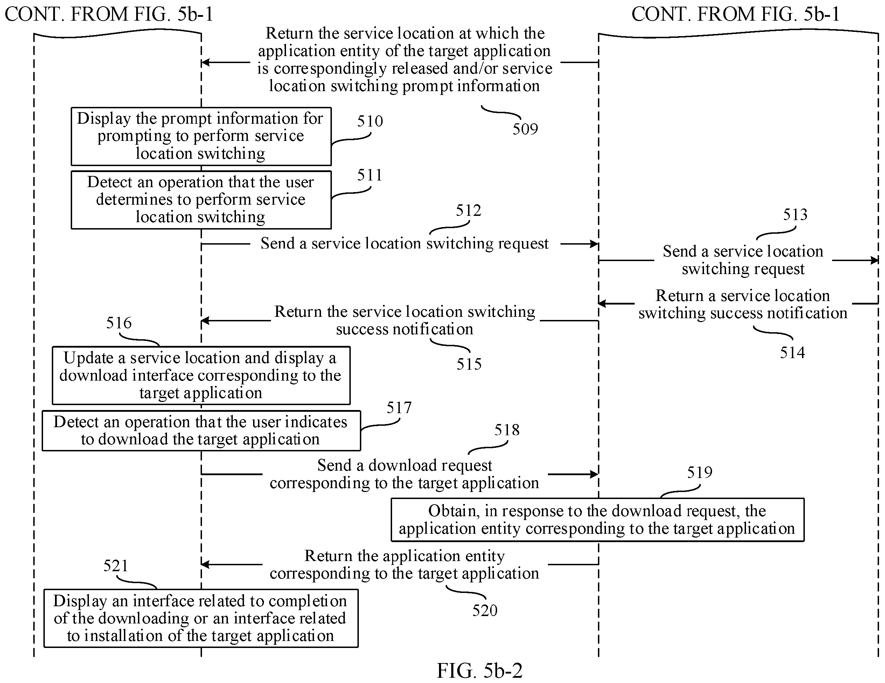

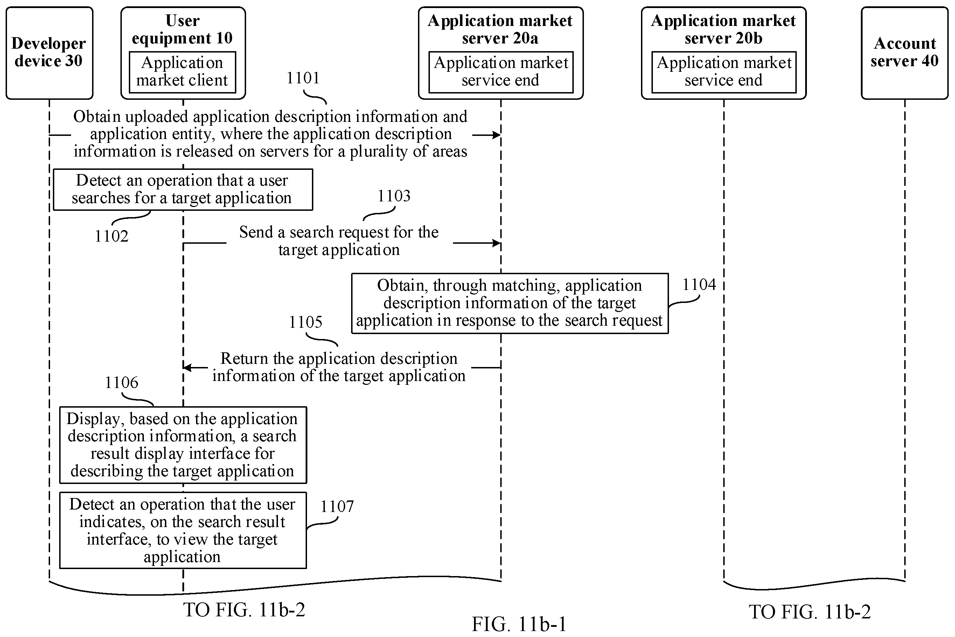

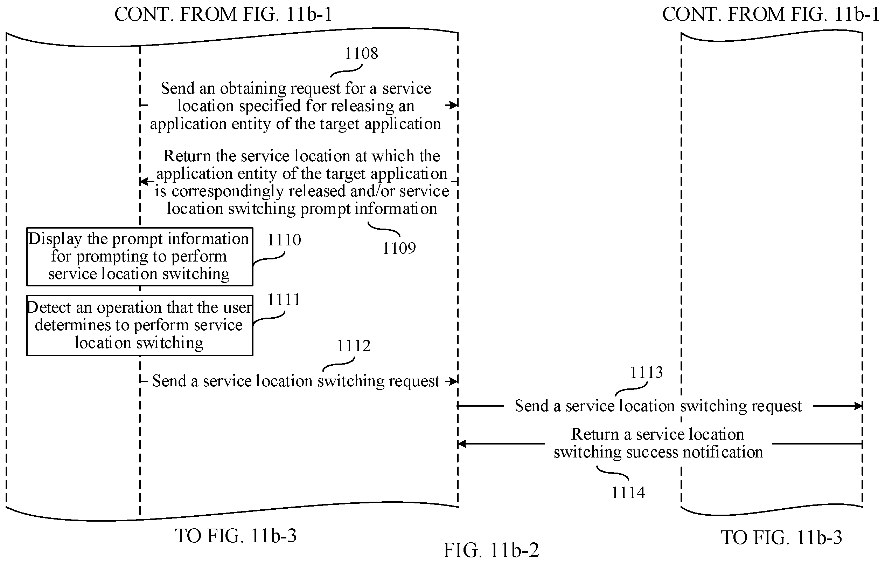

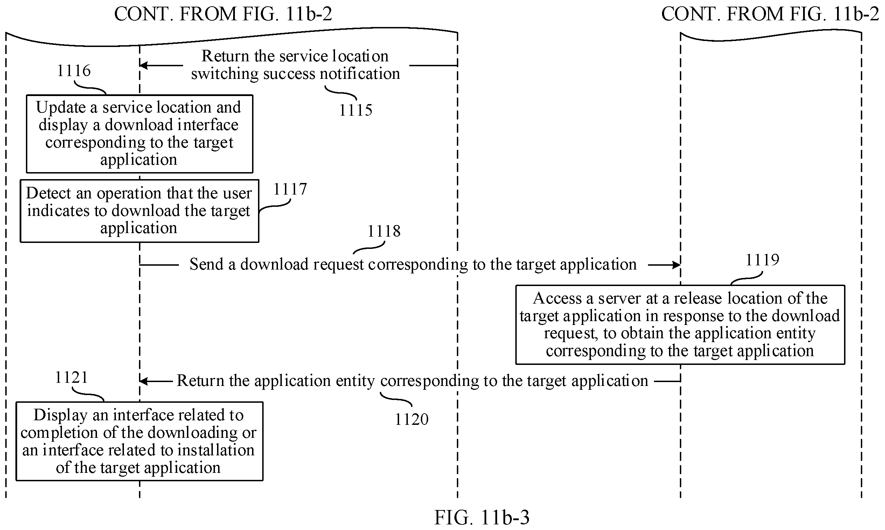

In this embodiment of this application, the processor 110 of a mobile phone 100 may generate the operation control signal by using the controller, to control instruction fetching and instruction execution, to implement the corresponding steps in the interaction procedure shown in FIG. 5 or the steps in the implementation procedure shown in FIG. 11, and implement the download method provided in this application. Details are not described herein again.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

In some embodiments, the processor 110 may include one or more ports. The port may include an inter-integrated circuit (inter-integrated circuit, I2C) port, an inter-integrated circuit sound (inter-integrated circuit sound, I2S) port, a pulse code modulation (pulse code modulation, PCM) port, a universal asynchronous receiver/transmitter (universal asynchronous receiver/transmitter, UART) port, a mobile industry processor port (mobile industry processor interface, MIPI), a general-purpose input/output (general-purpose input/output, GPIO) port, a SIM card port, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the user equipment 10, or may be configured to perform transmission of data between the user equipment 10 and a peripheral device, or may be configured to connect to a headset for playing audio through the headset. The port may be further configured to connect to another electronic device like an AR device.

It may be understood that a port connection relationship between the modules shown in this embodiment of this application is merely an example for description, and does not constitute a limitation on the structure of the user equipment 10. In some other embodiments of this application, the user equipment 10 may alternatively use a port connection manner different from that in the foregoing embodiment, or use a combination of a plurality of port connection manners.

A wireless communication function of the user equipment 10 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the user equipment 10 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution, applied to the user equipment 10, to wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the user equipment 10, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the user equipment 10, the antenna 1 is coupled to the mobile communication module 150, and the antenna 2 is coupled to the wireless communication module 160, so that the user equipment 10 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The user equipment 10 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the user equipment 10 may include one or N displays 194, where N is a positive integer greater than 1.

The user equipment 10 may implement a photographing function by using the ISP, the camera 193, the video codec, the GPU, the display 194, the application processor, and the like.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like RGB or YUV. In some embodiments, the user equipment 10 may include one or N cameras 193, where N is a positive integer greater than 1.

The port 120 for external memory may be configured to connect to an external storage card, for example, a micro SD card, to extend a storage capability of the user equipment 10. The external storage card communicates with the processor 110 through the port 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application needed by at least one function (for example, a sound playing function or an image playing function), and the like. The data storage area may store data (for example, audio data and a phone book) and the like created during use of the user equipment 10. In addition, the internal memory 121 may include a high-speed random access memory, or may further include a nonvolatile memory, for example, at least one magnetic disk storage device, a flash memory device, or a universal flash storage (universal flash storage, UFS). The processor 110 runs the instructions stored in the internal memory 121, and/or the instructions stored in the memory disposed in the processor, to perform various function applications of the user equipment 10 and data processing.

The user equipment 10 may implement an audio function, for example, music playing or recording by using the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The user equipment 10 determines pressure intensity based on the change in the capacitance. When a touch operation is performed on the display 194, the user equipment 10 performs detection on intensity of the touch operation by using the pressure sensor 180A. The user equipment 10 may calculate a touch position based on a detection signal of the pressure sensor 180A. In some embodiments, touch operations that are performed in a same touch position but have different touch operation intensity may correspond to different operation instructions.

The fingerprint sensor 180H is configured to collect a fingerprint. The user equipment 10 may implement fingerprint-based unlocking, application lock access, fingerprint-based photographing, fingerprint-based call answering, and the like by using a feature of the collected fingerprint. In embodiments of this application, when the user equipment 10 logs in to an account and downloads some applications, the user equipment 10 may verify a user identity by using the fingerprint sensor 180H, and then log in to a corresponding account to download an application in an application market.

The touch sensor 180K is also referred to as a "touch device". The touch sensor 180K may be disposed on the display 194, and the touch sensor 180K and the display 194 form a touchscreen, which is also referred to as a "touch screen". The touch sensor 180K is configured to perform detection on a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the user equipment 10 at a position different from that of the display 194.

The button 190 includes a power button, a volume button, and the like. The button 190 may be a mechanical button, or may be a touch button. The user equipment 10 may receive a button input, and generate a button signal input related to user settings and function control of the user equipment 10.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card port 195 is configured to connect to a SIM card. The SIM card may be inserted into the SIM card port 195 or removed from the SIM card port 195, to implement contact with or separation from the user equipment 10.

FIG. 13 is a diagram of a software structure of an operating system of a user equipment according to an embodiment of this application.

It may be understood that the operating system of the user equipment 10 may use a layered architecture, an event-driven architecture, a microkernel architecture, a microservice architecture, or a cloud architecture. In this embodiment of this application, an Android system with a layered architecture is used as an example to describe a software structure of a system of the user equipment 10.

In the layered architecture, software is divided into several layers, and each layer has a clear role and task. The layers communicate with each other through a software port. In some embodiments, the Android^{™} system is divided into four layers: an application layer, an application framework layer, an Android^{™} runtime (Android^{™} runtime) and system library, and a kernel layer from top to bottom.

As shown in FIG. 13, the application layer may include a series of application packages. The application packages may include applications such as Camera, Gallery, Calendar, Phone, Map, Navigation, WLAN, Bluetooth, Music, Videos, Messages, and Application market.

The application framework layer provides an application programming port (application programming interface, API) and a programming framework for an application at the application layer. The application framework layer includes some predefined functions.

The application framework layer may include a window manager, a content provider, a view system, a phone manager, a resource manager, a notification manager, and the like.

The window manager is configured to manage a window program. The window manager may further obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls such as a control for displaying text and a control for displaying an image. The view system may be configured to construct an application. A display interface may include one or more views. For example, a display interface including an SMS notification icon may include a text display view and an image display view.

The phone manager is configured to provide a communication function of the user equipment 10, for example, management of a call status (including answering, declining, or the like).

The resource manager provides various resources such as a localized character string, an icon, an image, a layout file, and a video file for an application.

The notification manager causes an application to display notification information in a status bar, and may be configured to convey a notification-type message. The message may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is displayed in the status bar, an alert tone is made, an electronic device vibrates, or an indicator blinks.

The Android^{™} runtime includes a core library and a virtual machine. The Android^{™} runtime is responsible for scheduling and management of the Android^{™} system.

The core library includes two parts: a performance function that needs to be invoked in a Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An embodiment of this application further provides a computer program product, configured to implement the download method provided in the foregoing embodiments.

Embodiments of a mechanism disclosed in this application may be implemented in hardware, software, firmware, or a combination of these implementation methods. Embodiments of this application may be implemented as a computer program module or module code executed on a programmable system. The programmable system includes at least one processor, a storage system (including a volatile memory, a nonvolatile memory, and/or a storage element), at least one input device, and at least one output device.

The computer program module or the module code may be used to input instructions, to perform functions described in this application and generate output information. The output information may be used in one or more output devices in a known manner. For a purpose of this application, a processing system includes any system having a processor like a digital signal processor (digital signal processor, DSP), a microcontroller, an application-specific integrated circuit (application-specific integrated circuit, ASIC), or a microprocessor.

The module code may be implemented in a high-level modular language or an object-oriented programming language, to communicate with the processing system. The module code may alternatively be implemented in an assembly language or a machine language when needed. Actually, the mechanism described in this application is not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine-readable (for example, computer-readable) form, including, but not limited to a floppy disk, a compact disc, an optical disc, a magneto-optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine-readable (for example, computer-readable) form.

References to "one embodiment" or "an embodiment" in the specification means that specific features, structures, or characteristics described with reference to the embodiment are included in at least one example implementation solution or technology disclosed in embodiments of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for required purposes or may include a general-purpose computer selectively activated or reconfigured by a computer program stored in the computer. Such a computer program may be stored in a computer-readable medium, for example, but not limited to, any type of disk, including a floppy disk, a compact disc, a CD-ROM, a magneto-optical disk, a read-only memory (ROM), a random access memory (RAM), an EPROM, an EEPROM, a magnetic card, an optical card, an application-specific integrated circuit (ASIC), and any type of medium suitable for storing electronic instructions. In addition, each of them may be coupled to a computer system bus. In addition, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, the disclosure of embodiments of this application are intended to describe but not to limit the scope of the concepts discussed in the specification.

## Claims

1. A download method, applied to a first device, wherein a use location currently set for the first device corresponds to a first service location; and
the method comprises:
detecting a first operation of a user in a first application, wherein the first operation indicates to obtain a first resource;
determining that a release location of the first resource is a second service location; and
switching the use location of the first device to the second service location in response to the first operation, and displaying the first resource in the first application.

2. The method according to claim 1, wherein the first resource comprises first description information and a first resource file, wherein
a release location of the first description information comprises a plurality of areas, and the plurality of areas comprise the second service location and the first service location; and
a release location of the first resource file comprises the second service location.

3. The method according to claim 2, wherein the detecting the first operation of the user in the first application comprises:
detecting a search operation of the user in the first application, wherein the search operation indicates to search for the first resource;
finding, by accessing a second device based on the first application, the first description information corresponding to the first resource, and displaying, in the first application, a first search result generated based on the first description information; and
detecting, corresponding to the first operation of the user on the first resource in the first search result, the first operation of the user in the first application.

4. The method according to claim 3, wherein the determining that the release location of the first resource is the second service location comprises:
obtaining release location information of the first resource file; and
determining, based on the release location information of the first resource file, that the release location of the first resource is the second service location.

5. The method according to claim 4, wherein the switching the use location of the first device to the second service location in response to the first operation comprises:
sending, to the second device, a switching request indicating to switch from the first service location to the second service location; and
updating the use location to the second service location based on a service location switching success notification returned by the second device.

6. The method according to claim 5, wherein the sending, to the second device, the switching request indicating to switch from the first service location to the second service location comprises:
displaying a first interface of the first application, wherein the first interface is for prompting the user to determine whether to perform service location switching; and
sending, corresponding to a second operation that the user determines to perform service location switching, the switching request to the second device, wherein the switching request indicates to switch from the first service location to the second service location.

7. The method according to claim 6, wherein the use location currently set for the first device is related to a first account logged in on the first device, and the first account is logged in on the first device for correspondingly accessing a third device; and
the based on the service location switching success notification returned by the second device comprises:
receiving the service location switching success notification returned by the third device via the second device.

8. The method according to claim 5, wherein an area to which the first service location belongs is the same as an area to which the second service location belongs, and the second device corresponds to a server for the area to which the first service location or the second service location belongs; and
the displaying the first resource in the first application comprises:
displaying a second interface of the first application, wherein the second interface indicates to install or play the first resource;
detecting a third operation that the user indicates to install or play the first resource, and sending, to the second device, a download request corresponding to the first resource; and
obtaining the first resource returned by the second device, and displaying a third interface of the first application, wherein display content on the third interface comprises the first resource.

9. The method according to claim 5, wherein an area to which the first service location belongs is different from an area to which the second service location belongs, a server for the area to which the first service location belongs corresponds to the second device, and a server for the area to which the second service location belongs corresponds to a third device; and
the displaying the first resource in the first application comprises:
displaying a second interface of the first application, wherein the second interface indicates to install or play the first resource;
detecting a third operation that the user indicates to install or play the first resource, and sending, to the third device, a download request corresponding to the first resource; and
obtaining the first resource returned by the third device, and displaying a third interface of the first application, wherein display content on the third interface comprises the first resource.

10. The method according to claim 8 or 9, wherein display content on the second interface is related to the first resource released at the second service location; and
the display content on the second interface further comprises one or more of the following data related to the first resource:
rating data corresponding to the first resource;
a statistical result of a quantity of downloads or installations corresponding to the first resource;
review data corresponding to the first resource;
a security detection result corresponding to the first resource;
detailed description data corresponding to the first resource; and
a recommended resource correspondingly matched with the first resource.

11. The method according to any one of claims 3 to 7, wherein the first resource comprises any one of an application, music, and a video.

12. The method according to claim 11, wherein corresponding to the first resource being an application, the detecting the first operation of the user in the first application comprises:
detecting an operation that the user indicates to view or install the first resource in the first search result.

13. The method according to claim 11, wherein corresponding to the first resource being music or a video, the detecting the first operation of the user in the first application comprises:
detecting an operation that the user indicates to download or play the first resource in the first search result.

14. A communication system, comprising a first device and a second device, wherein a use location currently set for the first device corresponds to a first service location, wherein
the first device is configured to send a first obtaining request for a first resource to the second device in response to a detected first operation of a user in a first application, wherein the first operation indicates to obtain the first resource;
the second device is configured to return first description information of the first resource to the first device in response to the first obtaining request sent by the first device, wherein the first description information comprises release location information of the first resource;
the first device is configured to determine, based on the release location information of the first resource, that a release location of the first resource is a second service location;
the first device switches the use location to the second service location, and sends a second obtaining request for a first resource file of the first resource to the second device based on the second service location; and
the second device is configured to return the first resource file to the first device in response to the second obtaining request sent by the first device.

15. The system according to claim 14, further comprising a third device, wherein the third device corresponds to a server for an area to which the second service location belongs, wherein
the first device switches the use location to the second service location, and sends a third obtaining request for the first resource file of the first resource to the third device based on the second service location; and
the third device is configured to return the first resource file to the first device in response to the third obtaining request sent by the first device.

16. The system according to claim 14 or 15, wherein a release location of the first description information comprises a plurality of areas, the plurality of areas comprise an area to which the first service location belongs and the area to which the second service location belongs; and
a release location of the first resource file comprises the second service location.

17. An electronic device, comprising one or more processors and one or more memories, wherein the one or more memories store one or more programs, and when the one or more programs are executed by the one or more processors, the electronic device is caused to perform the download method according to any one of claims 1 to 13.

18. A computer-readable medium, wherein the readable medium stores instructions, and when the instructions are executed on a computer, the computer is caused to perform the download method according to any one of claims 1 to 13.

19. A computer program product, comprising a computer program/instructions, wherein when the computer program/instructions is/are executed by a processor, the download method according to any one of claims 1 to 13 is implemented.
